# EUROPEAN PATENT APPLICATION

(11) **EP 4 080 963 A1**
(43) Date of publication of application: **26.10.2022**
(21) Application number: 20913357.8
(22) Date of filing: 30.10.2020
(51) Int. Cl.: H04W 72/04

(54) **METHOD FOR PERFORMING SIGNAL TRANSMISSION AND RECEPTION IN MEASUREMENT GAP, NETWORK ELEMENT DEVICE, AND READABLE STORAGE MEDIUM**

(30) Priority: 16.01.2020 CN 202010046566
(71) Applicant: Huawei Technologies Co., Ltd., Shenzhen, Guangdong 518129, (CN)
(72) Inventor: JIN, Le, Shenzhen, Guangdong 518129 (CN)
(74) Representative: Pfenning, Meinig & Partner mbB
(86) International application number: PCT/CN2020/125511
(87) International publication number: WO 2021/143283

(57) **Abstract**

This application is applicable to the field of communications technologies, and provides a method for signal reception and transmission in a measurement gap, a network element device, and a readable storage medium. The method includes: User equipment UE obtains, in dual connectivity, a measurement configuration delivered by a base station, and determines a first cell group in which signal reception and transmission can be performed in the measurement gap; performs signal reception and transmission with the base station in the first cell group in the measurement gap; and performs inter-frequency or inter-RAT measurement in a second cell group. The second cell group is a cell group in which signal reception or transmission cannot be performed in the measurement gap. In the measurement gap, the base station and the UE can still receive and transmit signals in the first cell group, and radio frequency channels of the UE that support signal reception and transmission in the measurement gap can be fully used for performing signal reception and transmission. Therefore, an uplink rate and a downlink rate of the UE can be effectively improved according to embodiments of this application.

## Description

This application claims priority to Chinese Patent Application No. 202010046566.3, filed with the China National Intellectual Property Administration on January 16, 2020 and entitled "METHOD FOR SIGNAL RECEPTION AND TRANSMISSION IN MEASUREMENT GAP, NETWORK ELEMENT DEVICE, AND READABLE STORAGE MEDIUM", which is incorporated herein by reference in its entirety.

### TECHNICAL FIELD

This application relates to the field of communications technologies, and in particular, to a method for signal reception and transmission in a measurement gap, a network element device, and a readable storage medium.

### BACKGROUND

With development of mobile communications technologies, the fifth generation mobile technology New Radio (New Radio, NR) emerges. NR has two networking modes: non-standalone (Non-Standalone, NSA) networking and standalone (Standalone, SA) networking.

NSA uses a multi-radio dual connectivity (Multi-Radio Dual Connectivity, MR-DC) technology to provide smooth network transition from Long Term Evolution (Long Term Evolution, LTE) to NR. To be specific, an NSA core network uses a 4G core network, and a 5G network can be deployed based on an existing 4G core network. This accelerates commercial use of the NR technology. An SA core network uses a 5G core network (NR Core, NC), which has a higher deployment cost.

In NSA networking, a terminal needs to access both 4G and 5G networks. If the terminal supports MR-DC, the terminal needs to have independent radio frequency channels (or transceivers) of two communications standards (4G and 5G), to ensure that the terminal can simultaneously receive and send data on networks of the two standards.

In MR-DC, when signal quality of a current serving cell is poor, user equipment (User Equipment, UE) needs to be handed over to a neighboring cell with good signal quality in a timely manner, to obtain a continuous service of a wireless network. Before the UE is handed over from a base station corresponding to the current serving cell to a base station of the neighboring cell, the UE needs to perform intra-frequency, inter-frequency, and/or inter-RAT measurement based on an arrangement of network cells.

Depending on a UE capability, the UE can support gap-assisted measurement (gap-assisted measurement) or non-gap-assisted measurement (non-gap-assisted measurement). If the UE supports only gap-assisted measurement, when the measurement is triggered, the base station configures a measurement gap for the UE. In the measurement gap, the base station and the UE stop signal reception and transmission to each other, and the UE receives a signal from a neighboring cell to complete the measurement. Therefore, in the measurement gap, the base station and the UE stop data transmission and reception, and consequently the uplink and downlink rates of the UE decrease.

### SUMMARY

Embodiments of this application provide a method for signal reception and transmission in a measurement gap, a network element device, and a readable storage medium, to resolve a problem that an uplink rate and a downlink rate of UE decrease during gap-assisted measurement.

According to a first aspect, an embodiment of this application provides a method for signal reception and transmission in a measurement gap, applied to user equipment UE, where the method for signal reception and transmission in a measurement gap includes:

In dual connectivity, measurement configuration information delivered by a base station is obtained. The measurement configuration information includes a to-be-measured frequency and measurement gap gap configuration information.

In the measurement gap, signal reception and transmission with the base station is performed based on processing capability information of the UE. The processing capability information is used to identify a first cell group in which the UE can receive and transmit a signal in the measurement gap, the processing capability information is determined based on the to-be-measured frequency and a UE capability, and the UE capability is used to identify a band combination supported by the UE.

It should be understood that the UE capability may be a radio frequency capability of the UE, and the UE capability is a band combination supported by the UE.

The measurement gap configuration information may include: a measurement gap repetition period (Measurement Gap Repetition Period, MGRP), a measurement gap length (Measurement Gap Length, MGL), and a gap offset (gap Offset). The MGRP may be 40 ms (ms), and the maximum MGL is 6 ms.

The UE may configure a measurement gap period based on the MGRP, configure a measurement gap length based on the MGL, and determine, based on the MGRP, the MGL, and the gap offset, that the start location of the measurement gap is on a system frame number (System Frame Number, SFN) and a subframe (subframe) that meet the following conditions:
SFN mod T = FLOOR (gapOffset/10);
subframe = gapOffset mod 10; and
T = MGRP/10.

FLOOR (gapOffset/10) indicates that the value of gapOffset/10 is rounded down to the largest integer that is not greater than the value of gapOffset/10. Herein, gapOffset mod 10 indicates that a modulo operation is performed on gapOffset and 10.

It may be understood that the processing capability information of the UE may be determined by the UE, or may be determined by the base station and then sent to the UE.

In this embodiment of this application, outside the measurement gap, the UE may perform signal reception and transmission with the base station in both a master cell group and a secondary cell group. In the measurement gap, the UE and the base station in the first cell group may not interrupt signal reception and transmission, and may continue to transmit data. The UE may switch at least one radio frequency channel in the second cell group to the to-be-measured frequency, to measure the to-be-measured frequency. In the measurement gap, signal reception and transmission may not be interrupted in the first cell group. This improves uplink and downlink rates of the UE.

In a possible implementation of the first aspect, the processing capability information of the UE is determined by the UE based on the to-be-measured frequency and the UE capability.

For example, both the base station and the UE can determine the processing capability information of the UE based on the to-be-measured frequency and the UE capability. In this way, neither the base station nor the UE needs to notify each other of the processing capability information of the UE.

When the processing capability information of the UE is determined by the UE, the UE sends the processing capability information of the UE to the base station. In this way, the base station does not need to determine the processing capability information of the UE.

When the processing capability information of the UE is determined by the base station, the base station sends the processing capability information of the UE to the UE, and the UE directly obtains the processing capability information of the UE without determining the processing capability information of the UE based on the frequency to be measured and the UE capability. In this way, the UE can save some computing resources.

For example, the base station determines the processing capability information of the UE based on the UE capability and the to-be-measured frequency, and sends the processing capability information of the UE to the UE by using the measurement configuration information.

In a possible implementation of the first aspect, that signal reception and transmission with the base station is performed based on processing capability information of the UE includes: in the measurement gap, a first signal is sent to the base station in the first cell group through a physical uplink shared channel PUSCH, and a second signal delivered by the base station is received through a physical downlink shared channel PDSCH.

In a possible implementation of the first aspect, the first cell group includes a master cell group (Master Cell Group, MCG) and/or a secondary cell group (Secondary Cell Group, SCG). It should be understood that the MCG is a cell group corresponding to a master node (a master base station), and the SCG is a cell group corresponding to a secondary node (a secondary base station).

In a possible implementation of the first aspect, when the UE supports a band combination consisting of a master band combination, a secondary band combination, and the to-be-measured frequency, the first cell group includes an MCG and an SCG. The master band combination is a band combination on a master node (a master base station accessed by the UE), and the secondary band combination is a band combination on a secondary node (a secondary base station accessed by the UE).

In a possible implementation of the first aspect, when the UE supports a band combination consisting of a master band combination and the to-be-measured frequency, the first cell group is an MCG.

In a possible implementation of the first aspect, when the UE supports a band combination consisting of a secondary band combination and the to-be-measured frequency, the first cell group is an SCG.

In a possible implementation of the first aspect, when the first cell includes an MCG or an SCG, after the measurement configuration information delivered by the base station is obtained, the method further includes:

A radio frequency channel of at least one component carrier is selected from a second cell group, and the to-be-measured frequency in the measurement gap is measured based on the measurement configuration information.

In a possible implementation of the first aspect, after the measurement configuration information delivered by the base station is obtained, and before signal reception and transmission with the base station is performed based on the processing capability information of the UE, the method further includes: acknowledgment information, used to identify that the measurement configuration information is received, is sent to the base station.

In a possible implementation of the first aspect, before signal reception and transmission with the base station is performed based on the processing capability information of the UE, the method further includes:

The processing capability information of the UE is sent to the base station. The processing capability information of the UE is used to indicate the base station to keep performing signal reception and transmission with the UE in the measurement gap.

The processing capability information of the UE is carried in radio resource control RRC signaling or a media access control control element MAC CE. The RRC signaling may be RRC Connection Reconfiguration Complete, or may be UE auxiliary information signaling.

In this embodiment, the UE may determine the processing capability information of the UE based on a radio frequency capability supported by the UE and the to-be-measured frequency, and report the processing capability information to the base station, and the base station and the UE may perform signal reception and transmission based on the processing capability information determined by the UE. The band combination supported in the UE capability reported by the UE is affected by a market demand, and cannot fully reflect the radio frequency capability of the UE. That is, the band combination supported in the UE capability reported by the UE may be a part of the band combination actually supported by the UE. Therefore, the processing capability information determined and reported by the UE based on the actual UE capability is more accurate than the processing capability information of the UE determined by the base station based on the UE capability reported by the UE. To be specific, the first cell group can be determined more accurately and comprehensively. This increases possible scenarios of frequency combinations supported in the measurement gap, further improves an uplink rate and a downlink rate of the UE.

In a possible implementation of the first aspect, to reduce signaling overheads, when the acknowledgment information is sent by using radio resource control RRC signaling, the processing capability information of the UE is carried in the RRC signaling.

In a possible implementation of the first aspect, the processing capability information of the UE is carried in the UE auxiliary information signaling.

In a possible implementation of the first aspect, the processing capability information of the UE is carried in the media access control control element MAC CE.

In this embodiment, the UE may report the processing capability information of the UE in a plurality of forms.

According to a second aspect, an embodiment of this application provides a method for signal reception and transmission in a measurement gap, applied to a base station, where the method for signal reception and transmission in a measurement gap includes:

In dual connectivity, measurement configuration information is delivered to UE. The measurement configuration information includes a to-be-measured frequency and measurement gap configuration information.

In the measurement gap, signal reception and transmission with the UE is performed based on processing capability information of the UE. The processing capability information of the UE is used to identify a first cell group in which the UE can receive and transmit a signal in the measurement gap, the processing capability information of the UE is determined based on the to-be-measured frequency and a UE capability, and the UE capability is used to identify a band combination supported by the UE.

It may be understood that the processing capability information of the UE may be determined by the UE, or may be determined by the base station.

For example, both the base station and the UE can determine the processing capability information of the UE based on the to-be-measured frequency and the UE capability. In this way, neither the base station nor the UE needs to notify each other of the processing capability information of the UE.

For another example, the UE sends the processing capability information of the UE to the base station. In this way, the base station does not need to determine the processing capability information of the UE.

For still another example, the base station sends the processing capability information of the UE to the UE, and the UE directly obtains the processing capability information of the UE without determining the processing capability information of the UE based on the frequency to be measured and the UE capability. In this way, the UE can save some computing resources. For example, the base station determines the processing capability information of the UE based on the UE capability and the to-be-measured frequency, and sends the processing capability information of the UE to the UE by using the measurement configuration information.

In this embodiment of this application, outside the measurement gap, the base station may perform signal reception and transmission with the UE in both a master cell group and a secondary cell group. In the measurement gap, the UE and the base station in the first cell group may not interrupt signal reception and transmission, and the base station stops scheduling the UE in the second cell group. The UE switches at least one radio frequency channel in the second cell group to the to-be-measured frequency, to measure the to-be-measured frequency. In the measurement gap, signal reception and transmission are not interrupted in the first cell group. This improves an uplink rate and a downlink rate of the UE in the first cell group, and increases a data transmission rate of the UE.

In a possible implementation of the second aspect, that signal reception and transmission with the UE is performed based on processing capability information of the UE includes: in the measurement gap, data sent by the UE is received in the first cell group through a physical uplink shared channel PUSCH, and data is sent to the UE through a physical downlink shared channel PDSCH.

In a possible implementation of the second aspect, the first cell group includes a master cell group MCG and/or a secondary cell group SCG.

In a possible implementation of the second aspect, when the first cell includes an MCG or an SCG, after the measurement configuration information delivered by the base station is obtained, the method further includes: in the measurement gap, signal reception and transmission with the UE is stopped in a second cell group.

In a possible implementation of the second aspect, before signal reception and transmission with the UE is performed based on the processing capability information of the UE, the method further includes: acknowledgment information that is sent by the UE and used to identify that the measurement configuration information is received is received.

In a possible implementation of the second aspect, before signal reception and transmission with the UE is performed based on the processing capability information of the UE, the method further includes:

Processing capability information of the UE is determined based on the to-be-measured frequency and a UE capability reported by the UE.

It can be understood that the UE capability is a band combination supported by the UE, and is reported by the UE.

In a possible implementation of the second aspect, after determining the processing capability information of the UE, the base station may further send the processing capability information of the UE to the UE, and the UE does not need to determine the processing capability information of the UE. For example, the base station may use the measurement configuration information to carry the processing capability information of the UE. That is, the measurement configuration information further includes the processing capability information of the UE.

In a possible implementation of the second aspect, before signal reception and transmission with the UE is performed based on the processing capability information of the UE, the method further includes: processing capability information of the UE sent by the UE is received.

In a possible implementation of the second aspect, when the UE supports a band combination consisting of a master band combination, a secondary band combination, and the to-be-measured frequency, the first cell group includes an MCG and an SCG.

In a possible implementation of the second aspect, when the UE supports a band combination consisting of a master band combination and the to-be-measured frequency, the first cell group includes an MCG.

In a possible implementation of the second aspect, when the UE supports a band combination consisting of a secondary band combination and the to-be-measured frequency, the first cell group is an SCG.

In a possible implementation of the second aspect, when the acknowledgment information is sent by using radio resource control RRC signaling, the processing capability information is carried in the RRC signaling.

In a possible implementation of the second aspect, the processing capability information of the UE is carried in the UE auxiliary information signaling.

In a possible implementation of the second aspect, the processing capability information of the UE is carried in the media access control control element MAC CE.

According to a third aspect, an embodiment of this application provides a signal reception and transmission apparatus, where the signal reception and transmission apparatus may be user equipment UE, and includes:
an obtaining unit, configured to obtain, in dual connectivity, measurement configuration information delivered by a base station, where the measurement configuration information includes a to-be-measured frequency and measurement gap configuration information; and
a transmitting unit, configured to perform, in the measurement gap, signal reception and transmission with the base station based on processing capability information of the UE, where the processing capability information is used to identify a first cell group in which the UE can receive and transmit a signal in the measurement gap, the processing capability information is determined based on the to-be-measured frequency and a UE capability, and the UE capability is used to identify a band combination supported by the UE.

It should be understood that the UE capability may be a radio frequency capability of the UE, and the UE capability is a band combination supported by the UE.

Beneficial effects of this embodiment of this application are the same as those of the method for signal reception and transmission in a measurement gap in the first aspect. For details, refer to related descriptions in the first aspect. Details are not described herein again.

In a possible implementation of the third aspect, the processing capability information of the UE is determined by the UE based on the to-be-measured frequency and the UE capability.

In a possible implementation of the third aspect, the processing capability information is determined by the base station based on the to-be-measured frequency and the UE capability reported by the UE, and is then sent to the UE.

In a possible implementation of the third aspect, the transmitting unit is specifically configured to: in the measurement gap, transmit a first signal to the base station through a physical uplink shared channel PUSCH in the first cell group, and receive a second signal delivered by the base station through a physical downlink shared channel PDSCH.

In a possible implementation of the third aspect, the first cell group includes a master cell group (Master Cell Group, MCG) and/or a secondary cell group (Secondary Cell Group, SCG). It should be understood that the MCG is a cell group corresponding to a master node (a master base station), and the SCG is a cell group corresponding to a secondary node (a secondary base station).

In a possible implementation of the third aspect, when the UE supports a band combination consisting of a master band combination, a secondary band combination, and the to-be-measured frequency, the first cell group includes the MCG and the SCG.

In a possible implementation of the third aspect, when the UE supports a band combination consisting of a master band combination and the to-be-measured frequency, the first cell group is the MCG.

In a possible implementation of the third aspect, when the UE supports a band combination consisting of a secondary band combination and the to-be-measured frequency, the first cell group is the SCG.

In a possible implementation of the third aspect, when the first cell includes an MCG or an SCG, the signal reception and transmission apparatus further includes:
a measurement unit, configured to: after the obtaining unit obtains the measurement configuration information delivered by the base station, select at least one component carrier from a second cell group, and measure the to-be-measured frequency in the measurement gap based on the measurement configuration information.

In a first possible implementation of the third aspect, the signal reception and transmission apparatus further includes:
a sending unit, configured to: before the transmitting unit performs signal reception and transmission with the base station based on the processing capability information, send acknowledgment information used to identify that the measurement configuration information is received, to the base station.

In a first possible implementation of the third aspect, the signal reception and transmission apparatus further includes:
a determining unit, configured to determine the processing capability information based on the to-be-measured frequency and a UE capability; and
the sending unit is further configured to: after the determining unit determines the processing capability information, and before the transmitting unit performs signal reception and transmission with the base station based on the processing capability information, send processing capability information of the UE to the base station, where the processing capability information of the UE is used to indicate that the base station can perform signal reception and transmission with the UE in the measurement gap.

In a possible implementation of the third aspect, to reduce signaling overheads, when the acknowledgment information is sent by using radio resource control RRC signaling, the processing capability information of the UE is carried in the RRC signaling.

In a possible implementation of the third aspect, the processing capability information of the UE is carried in the UE auxiliary information signaling.

In a possible implementation of the third aspect, the processing capability information of the UE is carried in the media access control control element MAC CE.

In this embodiment, the UE may report the processing capability information of the UE in a plurality of forms.

According to a fourth aspect, an embodiment of this application provides a signal reception and transmission apparatus, where the signal reception and transmission apparatus may be a base station, and the signal reception and transmission apparatus includes:
a sending unit, configured to send, in dual connectivity, measurement configuration information to UE, where the measurement configuration information includes a to-be-measured frequency and measurement gap configuration information; and
a transmitting unit, configured to perform, in the measurement gap, signal reception and transmission with the UE based on processing capability information of the UE, where the processing capability information of the UE is used to identify a first cell group in which the UE can receive and transmit a signal in the measurement gap, the processing capability information of the UE is determined based on the to-be-measured frequency and a UE capability, and the UE capability is used to identify a band combination supported by the UE.

Beneficial effects of this embodiment of this application are the same as those of the method for signal reception and transmission in a measurement gap in the second aspect. For details, refer to related descriptions in the second aspect. Details are not described herein again.

In a possible implementation of the fourth aspect, the transmitting unit is specifically configured to: in the measurement gap, receive a first signal sent by the UE through a physical uplink shared channel PUSCH in the first cell group, and transmit a second signal to the UE through a physical downlink shared channel PDSCH.

In a possible implementation of the fourth aspect, the first cell group includes a master cell group MCG and/or a secondary cell group SCG.

In a possible implementation of the fourth aspect, when the first cell includes an MCG or an SCG, the signal reception and transmission apparatus further includes:
a control unit, configured to: after the sending unit sends the measurement configuration information to the UE, stop signal reception and transmission with the UE in the second cell group in a measurement gap.

In a possible implementation of the fourth aspect, the signal reception and transmission apparatus further includes:
a receiving unit, configured to: before the transmitting unit performs signal reception and transmission with the UE based on processing capability information of the UE, receive acknowledgment information that is sent by the UE and used to identify that the measurement configuration information is received.

In a possible implementation of the fourth aspect, the signal reception and transmission apparatus further includes:
a determining unit, configured to: before the transmitting unit performs signal reception and transmission with the UE based on the processing capability information of the UE, determine processing capability information of the UE based on the to-be-measured frequency and a UE capability reported by the UE. It can be understood that the UE capability is a band combination supported by the UE, and is reported by the UE.

In a possible implementation of the fourth aspect, the measurement configuration information further includes the processing capability information of the UE.

In a possible implementation of the fourth aspect, the receiving unit is further configured to: before the transmitting unit performs signal reception and transmission with the UE based on the processing capability information of the UE, receive the processing capability information of the UE sent by the UE.

In a possible implementation of the fourth aspect, when the UE supports a band combination consisting of a master band combination, a secondary band combination, and the to-be-measured frequency, the first cell group includes an MCG and an SCG.

In a possible implementation of the fourth aspect, when the UE supports a band combination consisting of the master band combination and the to-be-measured frequency, the first cell group includes the MCG.

In a possible implementation of the fourth aspect, when the UE supports a band combination consisting of the secondary band combination and the to-be-measured frequency, the first cell group is the SCG.

In a possible implementation of the fourth aspect, when the acknowledgment information is sent by using radio resource control RRC signaling, the processing capability information is carried in the RRC signaling.

In a possible implementation of the fourth aspect, the processing capability information of the UE is carried in the UE auxiliary information signaling.

In a possible implementation of the fourth aspect, the processing capability information of the UE is carried in the media access control control element MAC CE.

According to a fifth aspect, an embodiment of this application provides a network element device, including a memory, a processor, and a computer program that is stored in the memory and that can run on the processor. When the processor executes the computer program, the network element device performs the method for signal reception and transmission in a measurement gap in any one of the possible implementations of the first aspect, or performs the method for signal reception and transmission in a measurement gap in any one of the possible implementations of the second aspect.

According to a sixth aspect, an embodiment of this application provides a computer-readable storage medium, where the computer-readable storage medium stores a computer program. When the computer program is executed by a processor, the network element device performs the method for signal reception and transmission in a measurement gap in any one of the possible implementations of the first aspect, or performs the method for signal reception and transmission in a measurement gap in any one of the possible implementations of the second aspect.

According to a seventh aspect, an embodiment of this application provides a computer program product. When the computer program product is run on a network element device, the network element device performs the method for signal reception and transmission in a measurement gap in any one of the possible implementations of the first aspect, or performs the method for signal reception and transmission in a measurement gap in any one of the possible implementations of the second aspect.

It should be understood that, for beneficial effects of the second aspect to the fifth aspect, refer to related descriptions in the first aspect. Details are not described herein again.

Compared with the current technology, this embodiment of this application has the following beneficial effect: In dual connectivity, in the measurement gap, inter-frequency measurement or inter-RAT measurement is performed in a cell group that does not support signal reception and transmission in the measurement gap. Signal reception and transmission may continue to perform in a cell group that supports signal reception and transmission in the measurement gap. This can increase an uplink rate and a downlink rate of the cell group, and increase an uplink rate and a downlink rate of the UE.

### BRIEF DESCRIPTION OF DRAWINGS

FIG. 1 is a schematic diagram of an EN-DC network structure according to an embodiment of this application;
FIG. 2 is a schematic diagram of an NGEN-DC network structure according to an embodiment of this application;
FIG. 3 is a schematic diagram of an NE-DC network structure according to an embodiment of this application;
FIG. 4 is a schematic diagram of an example of a system architecture according to an embodiment of this application;
FIG. 5 is an interaction diagram of a method for signal reception and transmission in a measurement gap according to an embodiment of this application;
FIG. 6 is a schematic diagram of a measurement gap according to an embodiment of this application;
FIG. 7 is an interaction diagram of a method for signal reception and transmission in a measurement gap according to another embodiment of this application;
FIG. 8 is an interaction diagram of a method for signal reception and transmission in a measurement gap according to still another embodiment of this application;
FIG. 9 is a schematic diagram of a structure of a signal reception and transmission apparatus according to an embodiment of this application;
FIG. 10 is a schematic diagram of a structure of a signal reception and transmission apparatus according to an embodiment of this application; and
FIG. 11 is a schematic diagram of a structure of a network element device according to an embodiment of this application.

### DESCRIPTION OF EMBODIMENTS

In the following descriptions, to illustrate rather than limit, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and claims of this application, the term "include" indicates presence of described features, entireties, steps, operations, elements, and/or components, but does not exclude presence or addition of one or more other features, entireties, steps, operations, elements, components, and/or collections thereof.

It should be further understood that the term "and/or" used in the specification and claims of this application indicates any combination and all possible combinations of one or more items listed in association, and includes the combinations.

As used in the specification and claims of this application, the term "if' may be interpreted as "when", "once", "in response to determining", or "in response to detecting" depending on the context. Similarly, the phrase "if it is determined" or "if the [described condition or event] is detected" may be interpreted as a meaning of "once determined" or "in response to determining" or "once the [described condition or event] is detected" or "in response to detecting the [described condition or event]" depending on the context.

In addition, in the descriptions of the specification and claims of this application, the terms "first", "second", "third", and the like are merely intended for a purpose of differentiated description, but shall not be understood as an indication or an implication of relative importance.

Referring to "an embodiment" or "some embodiments" or the like in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

With development of mobile technologies, a dual connectivity (Dual Connectivity, DC) technology gradually develops into a multi-radio dual connectivity (Multi-Radio Dual Connectivity, MR-DC) technology that includes a plurality of standards. Currently, NSA uses the MR-DC technology to provide smooth network transition from Long Term Evolution (Long Term Evolution, LTE) to NR. This accelerates commercial deployment of the NR technology.

The MR-DC mainly includes three forms: EN-DC (E-UTRA-NR Dual Connectivity, E-UTRA-NR dual connectivity), NGEN-DC (NG-RAN E-UTRA-NR Dual Connectivity, NG-RAN E-UTRA-NR dual connectivity), and NE-DC (NR-E-UTRA Dual Connectivity, NR-E-UTRA dual connectivity). The NSA network uses the EN-DC technology.

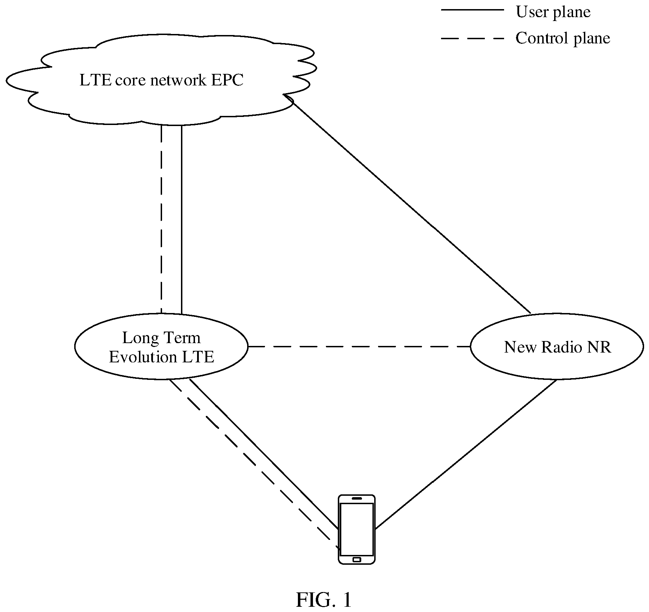

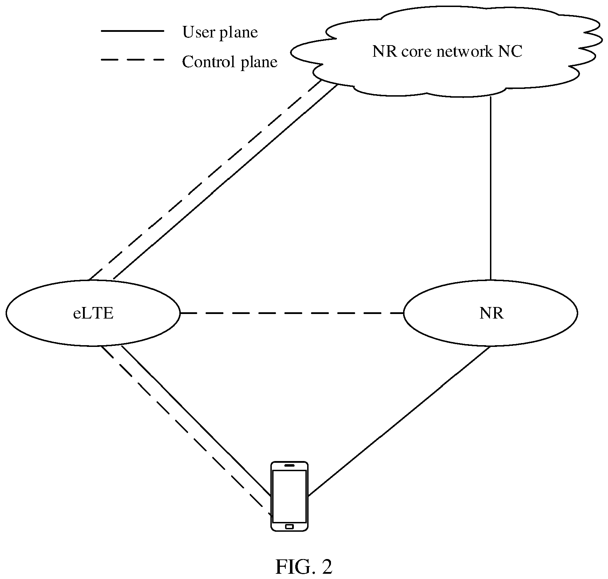

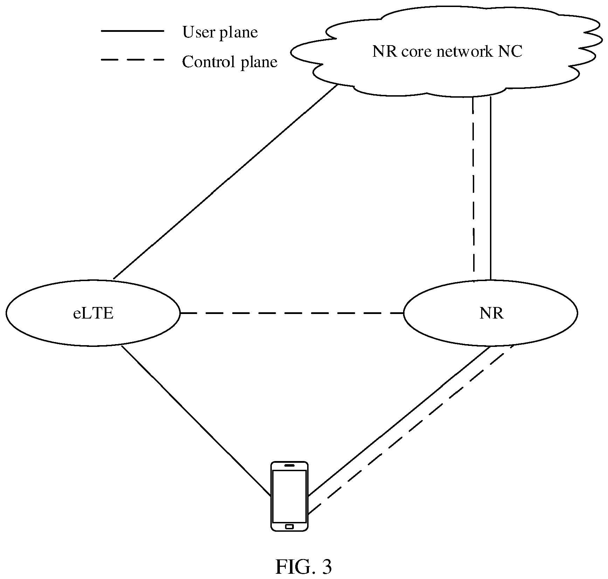

Refer to FIG. 1 to FIG. 3. FIG. 1 is a schematic diagram of an EN-DC network structure according to an embodiment of this application, FIG. 2 is a schematic diagram of an NGEN-DC network structure according to an embodiment of this application, and FIG. 3 is a schematic diagram of an NE-DC network structure according to an embodiment of this application.

As shown in FIG. 1, an LTE evolved packet core (Evolved Packet Core, EPC) network, an LTE access network, and an NR access network are used. UE is connected to both an eNodeB (4G base station) and a gNodeB (5G base station), the eNodeB is used as a master node, and the gNodeB is used as a secondary node. In this way, control plane signaling is sent to the UE mainly over the LTE, and the NR mainly provides user plane data transmission. In addition, an operator does not need to deploy an NR core network (NR Core, NC).

As shown in FIG. 2, an NR core network NC, an LTE access network, and an NR access network are used. The UE is connected to both an eNodeB and a gNodeB, the eNodeB is used as a master node, and the gNodeB is used as a secondary node. In this way, control plane signaling is sent to the UE still mainly over the LTE, and the NR mainly provides user plane data transmission. An operator needs to deploy the NR core network NC.

As shown in FIG. 3, an NR core network NC, an LTE access network, and an NR access network are used. UE is connected to both an eNodeB and a gNodeB, the gNodeB is used as a master node, and the eNodeB is used as a secondary node. In this way, control plane signaling is sent to the UE mainly over the NR, and the LTE mainly provides user plane data transmission. An operator needs to deploy the NR core network NC.

If the UE supports MR-DC, the UE needs to have independent radio frequency channels of two standards (4G and 5G), to ensure simultaneous data reception and transmission on networks of the two standards. Radio frequency channels with different physical characteristics may be required for different standards and different bands (band). However, limited by costs of the UE, the UE usually cannot support all band combinations. EN-DC is used as an example. If the UE has one LTE B3 radio frequency channel and one NR n78 radio frequency channel, the UE can support an LTE B3 + NR n78 band combination, but does not support an LTE B3 + LTE B3 + NR n78 band combination (herein, the two LTE B3 are in-band non-contiguous), because there are no two LTE B3 radio frequency channels for the UE to simultaneously receive and send data on the two LTE B3. The UE notifies, by using a UE capability, the base station of a band combination supported by the UE.

In MR-DC, the UE also needs to perform mobility management. When signal quality of a primary cell (SpCell of a Master Cell Group, PCell) in a master cell group (Master Cell Group, MCG) in which the UE is located is poor, the UE needs to separately measure signal quality of a serving cell and a neighboring cell based on measurement configuration information delivered by a base station, and report a measurement result to the base station. The base station indicates, based on the measurement result, the UE to be handed over from the primary cell of the master cell group in which the UE is located to another neighboring cell with good signal quality, to obtain a continuous network service of a wireless network. Specifically, the implementation is as follows:

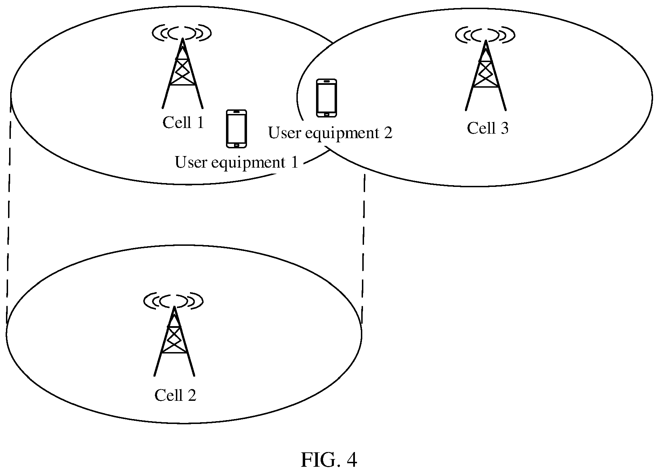

FIG. 4 is a schematic diagram of an example of a system architecture according to an embodiment of this application. In FIG. 4, a cell 1 is a cell on a master node, such as an LTE anchor cell in EN-DC; a cell 2 is a cell on a secondary node, such as an NR cell in EN-DC; and a cell 3 is an inter-frequency neighboring cell or an inter-RAT neighboring cell of the cell 1 or the cell 2. Coverage areas of the cell 1 and the cell 2 are the same, and a coverage area of the cell 3 is different from the coverage area of the cell 1 or the cell 2. When the UE camps on the cell 1, the base station delivers signaling to the UE for adding a secondary cell group, so that the UE adds the cell 2 as a primary cell (Primary Cell of Secondary Cell Group, PSCell) of the secondary cell group according to a secondary node addition procedure, to enable the UE to work in MR-DC.

Usually, in MR-DC, the UE is in an RRC connected mode, and the UE reports the UE capability to notify the base station of a band combination (4G band + 5G band) supported by the UE. The base station delivers, to the UE, measurement configuration information for a serving cell by using radio resource control (Radio Resource Control, RRC) signaling RRCConnectionReconfiguration based on the serving cell (for example, the cell 1) in which the UE is currently located and the band combination supported by the UE. The UE sends RRC signaling RRCConnectionReconfigurationComplete to the base station, to notify the base station that the measurement configuration information is received. The UE continuously measures signal quality of the serving cell based on the measurement configuration information for the serving cell. When the signal quality of the serving cell meets a measurement report condition in the measurement configuration information, the UE reports a measurement result of the serving cell to the base station by using RRC signaling MeasurementReport. The base station determines, based on the measurement result, whether to initiate neighboring cell measurement. For example, when the signal quality of the PCell where the UE is located is poor, the base station determines that the UE is at an edge of the cell and neighboring cell measurement needs to be initiated to find a neighboring cell with good signal quality as a target cell for handover. When a to-be-measured frequency and a frequency of the current serving cell are of a same standard and are the same frequency, the measurement is referred to as intra-frequency measurement. When the to-be-measured frequency and the frequency of the current serving cell are of a same standard but are different frequencies, the measurement is referred to as inter-frequency measurement. When the to-be-measured frequency and the frequency of the current serving cell are of different standards, the measurement is referred to as inter-RAT measurement.

When the base station determines that neighboring cell measurement needs to be initiated, the base station delivers measurement configuration information for the neighboring cell to the UE over RRC signaling, to enable the UE to continuously measure signal quality of the serving cell and the neighboring cell based on the measurement configuration information for the neighboring cell. When measurement report conditions are met, the UE reports measurement results of the serving cell and the neighboring cell. The base station determines, based on the measurement results, whether to initiate a handover to the neighboring cell. For example, when the signal quality of the serving cell is lower than a first threshold, the signal quality of the neighboring cell is higher than a second threshold, and the second threshold is greater than the first threshold, the base station indicates the UE to be handed over from the current serving cell to the neighboring cell. For example, as shown in FIG. 4, when the UE moves to the edge of the cell 1 or the cell 2, the base station initiates inter-frequency measurement or inter-RAT measurement, and the handover of the UE to the cell 3 is based on the measurement result.

The signal quality of the serving cell or the neighboring cell may be one or any combination of at least two of the following: reference signal received power (Reference Signal Receiving Power, RSRP), reference signal received quality (Reference Signal Receiving Quality, RSRQ), and a signal to interference plus noise ratio (Signal to Interference plus Noise Ratio, SINR).

According to an existing protocol, in MR-DC, measurement of an inter-frequency neighboring cell or an inter-RAT neighboring cell in a same frequency range (Frequency Range, FR) of a serving cell requires a measurement gap. Therefore, measurement configuration information for the inter-frequency neighboring cell or the inter-RAT neighboring cell includes measurement gap configuration information, and the measurement gap configuration information is used to configure a measurement gap.

According to an existing protocol, for NR-based intra-frequency measurement based on a synchronization signal and PBCH block (Synchronization Signal and PBCH block, SSB), if an active bandwidth part (Bandwidth Part, BWP) of an NR serving cell of the current UE is not an initial BWP (Initial BWP), and the active BWP does not include the to-be-measured intra-frequency SSB, the base station needs to configure a measurement gap. For ease of discussion and description, this type of intra-frequency measurement in this application is also classified as inter-frequency measurement.

According to an existing protocol, in MR-DC, measurement for an inter-frequency neighboring cell or an inter-RAT neighboring cell within a same frequency range of a serving cell requires a measurement gap. The current technology provides a measurement gap configuration method. When starting inter-frequency measurement and/or inter-RAT measurement, the base station directly configures a measurement gap for the UE. To be specific, the measurement configuration information for the inter-frequency neighboring cell or the inter-RAT neighboring cell within the same frequency range of the serving cell includes the measurement gap configuration information. The measurement gap is valid for both a master cell group (Master Cell Group, MCG) corresponding to the master node and a secondary cell group (Secondary Cell Group, SCG) corresponding to the secondary node. The UE is handed over to a neighboring cell at the start of the measurement gap to measure signal quality of the neighboring cell. In the measurement gap, the base station stops scheduling the UE, and the UE stops data reception and transmission in both the MCG and SCG. This wastes time-frequency resources and decreases the UE rate.

For example, if the UE supports a band combination of LTE B1 + LTE B3 + NR n78, the UE has independent radio frequency channels B1, B3, and n78, and can receive and transmit data on B1, B3, and n78 simultaneously. When the UE works in an EN-DC combination of LTE B1 + NR n78, and initiates inter-frequency measurement on a B3 frequency, the base station still needs to configure a measurement gap according to the current protocol. The following table lists working statuses of the radio frequency channels.

| Radio frequency channel | Working status outside the measurement gap | Working status in the measurement gap |
|---|---|---|
| LTE B1 radio frequency channel | B1 serving cell | Not working |
| LTE B3 radio frequency channel | Not working | B3 neighboring cell |
| NR n78 radio frequency channel | n78 serving cell | Not working |

It can be learned that in the measurement gap, both the radio frequency channels of LTE B1 and NR n78 are not working, while the UE actually supports data reception and transmission on the band combination of LTE B 1 and NR n78. In an actual network, a measurement gap period is usually 40 ms, and a gap length is 6 ms. That is, in every 40 ms, there is 6 ms in which the UE cannot receive or transmit data. If the 6 ms are used, in frequency division duplex (Frequency Division Duplexing, FDD) mode, the uplink rate and the downlink rate can be increased by 6/40 = 15%.

For the foregoing problem, another measurement gap configuration method is provided. Whether gap measurement is required for performing inter-frequency measurement or inter-RAT measurement by the UE in a current serving cell is reported by the UE by using the UE capability, or indicated by the base station through RRC signaling. When inter-frequency measurement or inter-RAT measurement is started, the base station may determine, based on the UE capability, whether to configure a measurement gap. When the UE supports measurement that does not require a measurement gap, the base station does not need to configure a measurement gap for the UE. To be specific, the measurement configuration information does not include the measurement gap configuration information. When the UE does not support measurement that does not require a measurement gap, the base station configures a measurement gap for the UE.

If the UE has a plurality of sets of independent radio frequency channels, and can support signal reception in an inter-frequency neighboring cell or an inter-RAT neighboring cell while receiving and transmitting data in a serving cell, the UE supports measurement that does not require a measurement gap. For example, when the UE supports a band combination of LTE B1 + LTE B3 + NR n78, the UE notifies the base station that in the EN-DC combination of LTE B1 + NR n78, measurement of a neighboring frequency of LTE B3 does not require a measurement gap.

If the UE has a plurality of sets of independent radio frequency channels, but cannot support signal reception in an inter-frequency neighboring cell or an inter-RAT neighboring cell while receiving and transmitting data in a serving cell, the UE does not support measurement that does not require a measurement gap.

In this measurement gap configuration method, when the base station does not need to configure a measurement gap for the UE, a case in which a rate of the UE is reduced because the UE cannot receive or transmit data in the measurement gap can be avoided. However, when the UE does not support measurement that does not require a measurement gap, once a measurement gap is configured, the measurement gap is valid for both the MCG and the SCG. In the measurement gap, the base station stops scheduling the UE, and the UE stops data reception and transmission in both the MCG and SCG. In this way, a radio frequency channel of the UE that supports data reception and transmission may also be in an idle mode, and data cannot be transmitted in the measurement gap, and a rate of the UE cannot be effectively improved.

For example, if the UE has only one LTE B3 radio frequency channel and one NR n78 radio frequency channel, the UE supports the LTE B3 + NR n78 band combination, but does not support the LTE B3 + LTE B3 + NR n78 band combination (two LTE B3 bands are in-band non-contiguous). If the UE works in LTE B3 + NR n78 EN-DC, and the LTE side initiates measurement of a neighboring frequency of LTE B3, a measurement gap is required. In this case, the following table lists working statuses of the radio frequency channels.

| Radio frequency channel | Working status outside the measurement gap | Working status in the measurement gap |
|---|---|---|
| LTE B3 radio frequency channel | B3 serving cell | B3 neighboring cell |
| NR n78 radio frequency channel | n78 serving cell | Not working |

In the measurement gap, although the measurement gap is required for LTE to adjust the radio frequency channel of the LTE B3 to the neighboring frequency of B3, the radio frequency channel of NR n78 is in an idle mode. The radio frequency channel of NR n78 actually can still be used to receive and transmit data in the serving cell of n78. In this case, because the radio frequency channel of NR n78 is not effectively used to receive and transmit data in the measurement gap, an uplink rate and a downlink rate of the NR cell cannot be increased.

For another example, the UE supports both the LTE B3 + NR n78 band combination and the LTE B41 + NR n78 band combination. However, because radio frequency channels of LTE B3 and LTE B41 cannot work independently simultaneously, the UE does not support the LTE B3 + LTE B41 + NR n78 band combination. Therefore, when the UE works in the LTE B3 + NR n78 EN-DC combination and initiates inter-frequency measurement on LTE B41, a measurement gap is required. In this case, the following table lists working statuses of the radio frequency channels.

| Radio frequency channel | Working status outside the measurement gap | Working status in the measurement gap |
|---|---|---|
| LTE B3/B41 radio frequency channel | B3 serving cell | B41 neighboring cell |
| NR n78 radio frequency channel | n78 serving cell | Not working |

In the measurement gap, a radio frequency channel of NR n78 is also in an idle mode, and may also be used to receive and transmit data in a serving cell of n78. This case also has a problem that a rate of the UE in the NR cell cannot be increased because the radio frequency channel of NR n78 is not effectively used to receive and transmit data in the measurement gap.

For another example, the UE supports the LTE B3 + NR n78 band combination, but does not support the LTE B3 + NR n78 + NR n78 band combination (because the UE has only one NR n78 radio frequency channel). When the UE works in the LTE B3 + NR n78 EN-DC combination and initiates inter-frequency measurement for n78, a measurement gap is required. In this case, the following table lists working statuses of the radio frequency channels.

| Radio frequency channel | Working status outside the measurement gap | Working status in the measurement gap |
|---|---|---|
| LTE B3 radio frequency channel | B3 serving cell | Not working |
| NR n78 radio frequency channel | n78 serving cell | n78 inter-frequency neighboring cell |

In the measurement gap, a radio frequency channel of LTE B3 is also in an idle mode, and may also be used to receive and transmit data in a serving cell of B3. This case also has a problem that a rate of the UE in the LTE cell cannot be increased because the radio frequency channel of LTE B3 is not effectively used to receive and transmit data in the measurement gap.

To resolve the foregoing problem, this application provides a method for signal reception and transmission in a measurement gap. The method for signal reception and transmission in a measurement gap is mainly applied to inter-frequency measurement and/or inter-RAT measurement in MR-DC. In consideration of compatibility between this solution and an existing protocol, in dual connectivity, an existing procedure of delivering a measurement configuration and an existing procedure of reporting a measurement result are still used in this solution to improve an effective range of the measurement gap. Compared with the current technology in which a configured measurement gap is valid for both an MCG and an SCG, in this solution, when inter-frequency and/or inter-RAT measurement are/is performed in MR-DC, and a measurement gap is required, the measurement gap is valid only for a cell group that does not support signal reception and transmission in the measurement gap. Details are as follows:

In dual connectivity, a base station delivers a measurement configuration according to an existing protocol, and UE obtains the measurement configuration information delivered by the base station. In a measurement gap, the UE performs signal reception and transmission with the base station based on processing capability information of the UE. The processing capability information is used to identify a first cell group in which the UE can receive and transmit a signal in the measurement gap.

In this embodiment of this application, the measurement gap in the measurement configuration information delivered by the base station is valid only for a second cell group in which signal transmission and reception cannot be performed in the measurement gap. In the measurement gap, the base station and the UE stop signal transmission and reception in the second cell group, and perform measurement over some radio frequency channels of the second cell group. The base station and the UE can still perform signal reception and transmission in the first cell group, to fully use a radio frequency channel that supports signal reception and transmission in the measurement gap to effectively improve an uplink rate and a downlink rate of the UE. The signal reception and transmission include transmitting or receiving signaling, data, and the like.

When a measurement gap does not need to be configured for the UE (to be specific, the first cell group includes a master cell group and a secondary cell group), the measurement gap in the measurement configuration information delivered by the base station is invalid for both the two cell groups, so that in the measurement gap, the base station and the UE can still receive and transmit signals in the two cell groups, and the UE performs measurement over a redundant radio frequency channel.

To make the objectives, technical solutions, and advantages of this application clearer, the following further describes specific implementations of the method for signal reception and transmission in a measurement gap according to this application in detail with reference to the accompanying drawings.

In this application, the processing capability information of the UE may be determined by the UE, or may be determined by the base station.

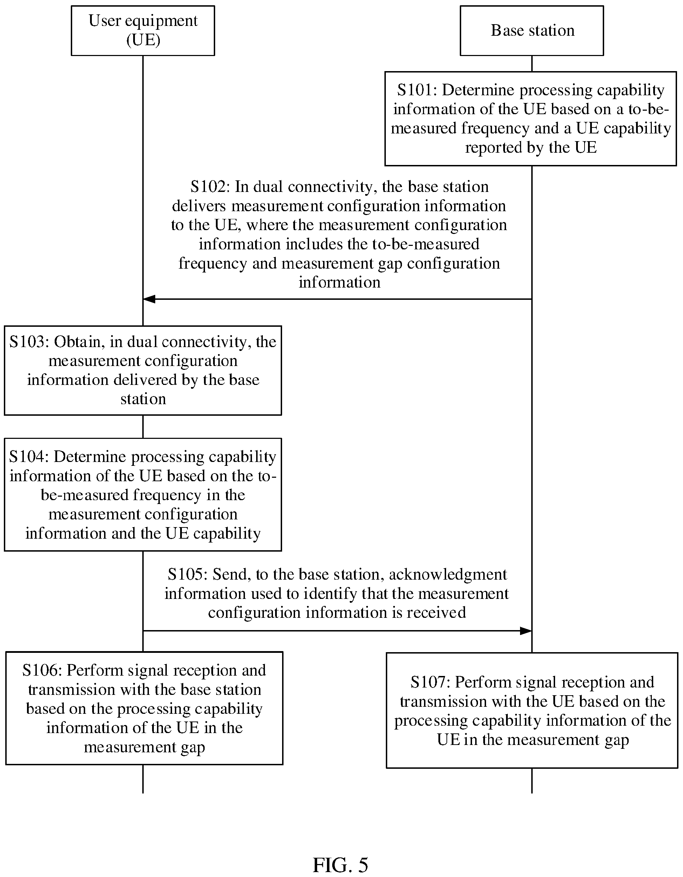

For example, as shown in FIG. 5, both the base station and the UE can determine the processing capability information of the UE based on a to-be-measured frequency and a UE capability. In this case, neither the base station nor the UE needs to notify each other of the processing capability information of the UE.

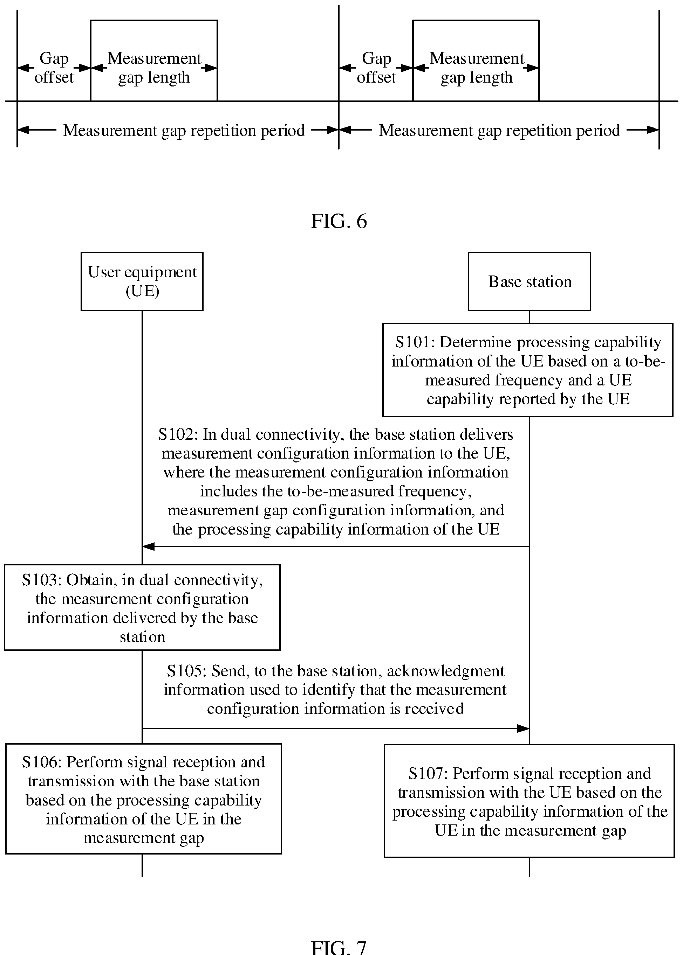

For another example, as shown in FIG. 7, after determining the processing capability information of the UE, the base station sends the processing capability information of the UE to the UE, and the UE directly obtains the processing capability information of the UE without determining the processing capability information of the UE based on the to-be-measured frequency and the UE capability. In this way, the UE can save some computing resources. For example, the base station determines the processing capability information of the UE based on the UE capability and the to-be-measured frequency, and sends the processing capability information of the UE to the UE by using the measurement configuration information.

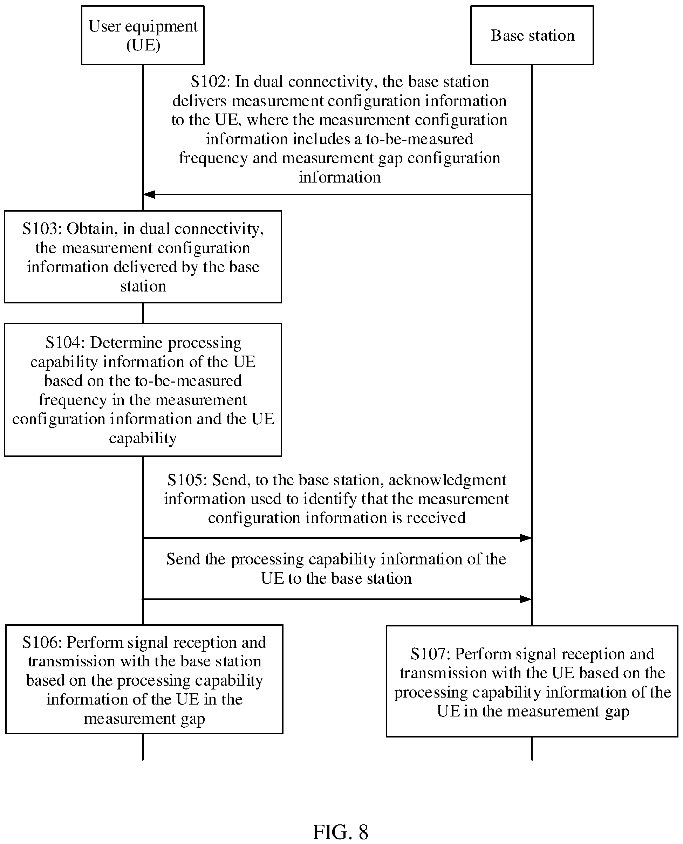

For still another example, as shown in FIG. 8, after determining the processing capability information of the UE based on the to-be-measured frequency and the UE capability, the UE may send the processing capability information of the UE to the base station. In this way, the base station does not need to determine the processing capability information of the UE.

The following separately describes specific implementation processes of the embodiments corresponding to FIG. 5, FIG. 7, and FIG. 8.

FIG. 5 is an interaction diagram of a method for signal reception and transmission in a measurement gap according to an embodiment of this application. Both the base station and the UE can determine the processing capability information of the UE based on the to-be-measured frequency and the UE capability. The method for signal reception and transmission in a measurement gap is mainly applied to inter-frequency measurement and/or inter-RAT measurement in MR-DC. In MR-DC, UE is connected to both an eNodeB and a gNodeB to access both an LTE network and an NR network. In a network structure, the eNodeB may be used as a master node, and the gNodeB may be used as a secondary node. In another network structure, the gNodeB may be used as a master node, and the eNodeB may be used as a secondary node. The master node is configured to manage a master cell group MCG, and the secondary node is configured to manage a secondary cell group SCG. The MCG includes one primary cell (Primary Cell, PCell) or additionally includes one or more secondary cells (Secondary Cell, SCell). The SCG includes one primary secondary cell (Primary Secondary Cell, PSCell) or additionally includes one or more secondary cells. The method for signal reception and transmission in a measurement gap in this embodiment includes the following steps:

S101: The base station determines processing capability information of the UE based on the to-be-measured frequency and the UE capability reported by the UE. The processing capability information is used to identify a first cell group in which the UE can receive and transmit a signal in the measurement gap, and the UE capability is used to identify a band combination supported by the UE.

The UE includes but is not limited to a terminal that can access a wireless network, such as a mobile phone, a tablet computer, a laptop computer, a netbook, or a personal digital assistant (personal digital assistant, PDA). The base station refers to a base station corresponding to an operator.

When the base station determines that signal quality of a serving cell in which the UE is currently located is poor and the UE is already at an edge of the cell, the base station queries, based on a cell list, a neighboring cell corresponding to the serving cell, and determines a to-be-measured frequency corresponding to the neighboring cell, to initiate inter-frequency neighboring cell measurement and/or inter-RAT neighboring cell measurement. The signal quality may be measured by using any one or at least two of reference signal received power RSRP, reference signal received quality RSRQ, and a signal to interference plus noise ratio SINR.

The base station obtains the UE capability reported by the UE. The UE may report the UE capability to the base station when the UE accesses the base station and the base station queries the UE capability. Alternatively, the UE may report the UE capability to the base station when the UE is handed over to a new cell and the base station queries the UE capability.

The UE capability may be used to identify a band combination supported by the UE. The UE capability may be a band combination supported by the UE, for example, the UE capability identifies: a band combination of LTE B3 + NR n78 supported by the UE, or a band combination of LTE B41 + NR n78 supported by the UE.

The UE capability may also be a radio frequency capability of the UE. The radio frequency capability of the UE refers to a radio frequency channel that the UE has. The UE may determine, based on the radio frequency capability of the UE, the band combination supported by the UE. The band combination supported by the UE includes a master band combination supported by the master node and a secondary band combination supported by the secondary node. The UE may determine, based on the band combination supported by the UE or the radio frequency capability of the UE, the band combination supported by the UE. For example, the UE has an LTE radio frequency channel and an NR n78 radio frequency channel. The LTE radio frequency channel is shared by LTE B3 and LTE B41. To be specific, LTE B3 and LTE B41 cannot work independently simultaneously. The UE supports the band combination of LTE B3 + NR n78 and the band combination of LTE B41 + NR n78.

The base station may determine, based on the to-be-measured frequency and the UE capability, whether the UE needs the measurement gap when measuring the to-be-measured frequency. When the measurement gap is not required, the first cell group includes an MCG and an SCG. When the measurement gap is required, the first cell group in which a signal can be received and transmitted in the measurement gap is further determined; and the processing capability information of the UE is obtained based on the determining result.

The processing capability information is used to identify the first cell group in which the UE can receive and transmit a signal in the measurement gap. The first cell group includes an MCG and/or an SCG. When the first cell group includes the MCG and the SCG, the UE does not need the measurement gap when measuring the to-be-measured frequency; when the first cell group includes the MCG or the SCG, the UE needs a measurement gap when measuring the to-be-measured frequency. A radio frequency channel corresponding to at least one component carrier (Component Carrier, CC) in the second cell group is used to measure the to-be-measured frequency in the measurement gap. When the first cell group is the MCG, the second cell group is the SCG; or when the first cell group is the SCG, the second cell group is the MCG.

Further, when the UE capability identifies that the UE supports a band combination consisting of a master band combination, a secondary band combination, and the to-be-measured frequency, the first cell group includes the MCG and the SCG. The master band combination is a band combination on a master node, and the secondary band combination is a band combination on a secondary node.

Further, when the UE supports a band combination consisting of a master band combination and the to-be-measured frequency, the first cell group is the MCG.

Further, when the UE supports a band combination consisting of a secondary band combination and the to-be-measured frequency, the first cell group is the SCG.

Further, a method in which the base station determines, based on the to-be-measured frequency and the UE capability, whether the UE needs the measurement gap when measuring the to-be-measured frequency may be specifically as follows:

The base station determines, based on the to-be-measured frequency and the band combination supported by the UE, whether the UE supports a first band combination consisting of the master band combination, the secondary band combination, and the to-be-measured frequency. If the UE supports the first band combination, the measurement gap is not required when the UE measures the to-be-measured frequency. In this case, the first cell group includes the MCG and the SCG. If the UE does not support the first band combination, the measurement gap is required when the UE measures the to-be-measured frequency. In this case, the first cell group includes the MCG or the SCG.

If the base station determines that the UE needs the measurement gap when measuring the to-be-measured frequency, the base station continues to determine whether the UE supports a second band combination consisting of the master band combination and the to-be-measured frequency, and whether the UE supports a third band combination consisting of the secondary band combination and the to-be-measured frequency. If the base station determines that the UE supports the second band combination but does not support the third band combination, the first cell group is the MCG. If the UE does not support the second band combination but supports the third band combination, the first cell group is the SCG.

For example, in MR-DC, a band combination currently configured for the UE is BC1+BC2, BC1 is a band combination on the master node, BC2 is a band combination on the secondary node, the to-be-measured frequency is fi, and 0<i<=N.

If for any i, where 0<i<=N, the UE supports a band combination of BC1+BC2+fi, the UE does not need the measurement gap when measuring the to-be-measured frequency, and the base station does not need to configure the measurement gap.

If for any i, where 0<i<=N, the UE does not support the band combination of BC1+BC2+fi, the UE needs the measurement gap when measuring the to-be-measured frequency, and the base station needs to configure the measurement gap. In this case, the base station continues to determine whether the UE supports a band combination of BC1+fi and a band combination of BC2+fi.

If for any i, where 0<i<=N, the UE supports a band combination of BC1+fi, and for any j, where 0<j<=N, the UE does not support a band combination of BC2+fj, the base station receives and transmits uplink and downlink signals in the master cell group in the measurement gap, and the UE transmits and receives uplink and downlink signals in the master cell group. The first cell group is the MCG.

If for any i, where 0<i<=N, the UE supports the band combination of BC2+fi, and for any j, where 0<j<=N, the UE does not support the band combination of BC1+fj, the base station receives and transmits uplink and downlink signals in a secondary node cell in the measurement gap, and the UE transmits and receives uplink and downlink signals on the secondary node cell. The first cell group is the SCG.

If for any i, where 0<i<=N, the UE does not support the band combination of BC1+fi, and for any j, where 0<j<=N, a UE does not support the band combination of BC2+fj, the base station does not receive or transmit uplink or downlink signals in the master cell group or the secondary cell group in the measurement gap, and the UE does not transmit or receive uplink or downlink signals in the master cell group or the secondary cell group.

For example, the UE supports both the LTE B3 + NR n78 band combination and the LTE B41 + NR n78 band combination. However, because radio frequency channels of LTE B3 and LTE B41 cannot work independently simultaneously, the UE does not support the LTE B3 + LTE B41 + NR n78 band combination. Therefore, when the UE works in the LTE B3 + NR n78 EN-DC combination and initiates inter-frequency measurement on LTE B41, a measurement gap is required. Because the master band combination is a band combination on a master node, and the secondary band combination is a band combination on a secondary node, the master band combination is: LTE B3, and the secondary band combination is: NR n78. The radio frequency channels of LTE B3 and LTE B41 cannot work independently simultaneously, so that the UE does not support the band combination of LTE B3 + LTE B41. To be specific, in this case, the UE does not support a band combination consisting of the master band combination and the to-be-measured frequency, but supports a band combination consisting of the secondary band combination and the to-be-measured frequency. When the UE performs inter-frequency measurement on LTE B41, the first cell group is the secondary cell group SCG, and the second cell group is the MCG. In the measurement gap, the UE performs inter-frequency measurement over the radio frequency channel of LTE B41 or the radio frequency channel of LTE B3. The UE and the base station keep normal uplink and downlink signal reception and transmission over NR n78.

Further, the UE capability may be used to identify a capability that whether a gap measurement is required for the UE measuring different bands in different band combinations.

A method in which the UE determines, based on the to-be-measured frequency and the UE capability, whether the UE needs the measurement gap when measuring the to-be-measured frequency may be specifically as follows:

The UE determines, based on the to-be-measured frequency and the capability that whether a gap measurement is required for the UE measuring different bands in different band combinations, whether the UE supports measurement of the to-be-measured frequency in the first band combination consisting of the master band combination and the secondary band combination without the measurement gap. If the UE supports the measurement without the measurement gap, the measurement gap is not required when the UE measures the to-be-measured frequency. In this case, the first cell group includes the MCG and the SCG. If the UE does not support the measurement without the measurement gap, the measurement gap is required when the UE measure the to-be-measured frequency. In this case, the first cell group includes the MCG or the SCG.

If the base station determines that the measurement gap is required when the UE performs measurement on the to-be-measured frequency, the base station continues to determine whether the UE that performs measurement on the to-be-measured frequency in the master band combination supports the measurement without the measurement gap, and whether the UE that performs measurement on the to-be-measured frequency in the secondary band combination supports the measurement without the measurement gap. If in the master band combination, the UE that performs measurement on the to-be-measured frequency supports the measurement without the measurement gap, but in the secondary band combination, the UE that performs measurement on the to-be-measured frequency does not support the measurement without the measurement gap, the first cell group is the MCG. If in the master band combination, the UE that performs measurement on the to-be-measured frequency does not support the measurement without the measurement gap, but in the secondary band combination, the UE that performs measurement on the to-be-measured frequency supports the measurement without the measurement gap, the first cell group is the SCG.

For example, in MR-DC, a band combination currently configured for the UE is BC1+BC2, BC1 is a band combination on the master node, BC2 is a band combination on the secondary node, the to-be-measured frequency is fi, 0<i<=N, and N is a quantity of to-be-measured frequencies.

If for any i, where 0<i<=N, the UE in a band combination of BC1+BC2 supports a fi measurement without the measurement gap, the measurement gap is not required when the UE measures the to-be-measured frequency, and the base station does not need to configure the measurement gap.

If for any i, where 0<i<=N, the UE in a band combination of BC1+BC2 does not support the fi measurement without the measurement gap, the measurement gap is required when the UE measures the to-be-measured frequency, and the base station needs to configure the measurement gap. In this case, the base station continues to determine whether the UE supports fi measurement without gap measurement in BC1 and supports fi measurement without gap measurement in BC2.

If for any i, where 0<i<=N, the UE in BC1 supports the fi measurement without the measurement gap, and for any j, where 0<j<=N, the UE in BC2 does not support the fj measurement without the measurement gap, the base station receives and transmits uplink and downlink signals in the master cell group in the measurement gap, and the UE transmits and receives uplink and downlink signals in the master cell group. The first cell group is the MCG.

If for any i, where 0<i<=N, the UE in BC1 does not support the fi measurement without the measurement gap, and for any j, where 0<j<=N, the UE in BC2 supports the fj measurement without the measurement gap, the base station receives and transmits uplink and downlink signals in the secondary node cell in the measurement gap, and the UE transmits and receives uplink and downlink signals in the secondary node cell. The first cell group is the SCG.

If for any i, where 0<i<=N, the UE in BC1 does not support the fi measurement without the measurement gap, and for any j, where 0<j<=N, the UE in BC2 does not support the fj measurement without the measurement gap, the base station does not receive or transmit uplink or downlink signals in the master cell group or the secondary cell group in the measurement gap, and the UE does not transmit or receive uplink or downlink signals in the master cell group or the secondary cell group.

S102: In dual connectivity, the base station delivers the measurement configuration information to the UE, where the measurement configuration information includes the to-be-measured frequency and the measurement gap configuration information.

The dual connectivity usually refers to MR-DC. When initiating the inter-frequency measurement and/or the inter-RAT measurement, the base station delivers the measurement configuration information to the UE.

In a possible implementation, the base station may deliver the measurement configuration information to the UE by using RRC signaling RRCConnectionReconfiguration.

The measurement configuration information may include information about a measurement object and the configuration information of the measurement gap, and may further include report configuration information, a measurement identifier, and measurement quantity configuration information. The information about the measurement object is used to indicate that the UE needs to perform the intra-frequency measurement, the inter-frequency measurement, or the inter-RAT measurement. When the to-be-measured frequency in the information about the measurement object and the frequency of the current serving cell are of a same standard and are the same frequency, the UE needs to perform the intra-frequency measurement. When the to-be-measured frequency and the frequency of the current serving cell are of a same standard but are different frequencies, the UE needs to perform the inter-frequency measurement. When the to-be-measured frequency and the frequency of the current serving cell are of different standards, the UE needs to perform the inter-RAT measurement.

In consideration of compatibility between this solution and an existing protocol, when the inter-frequency measurement and/or the inter-RAT measurement are/is performed in MR-DC, the measurement configuration information is delivered by using the existing protocol, and the measurement configuration information includes the measurement gap. The effective range of the measurement gap is improved in this solution. Compared with the current technology in which the configured measurement gap is valid for both the MCG and the SCG, in this solution, when the inter-frequency and/or the inter-RAT measurement are/is performed in MR-DC, and the measurement gap is required, the measurement gap is valid only for a cell group that does not support data reception and transmission in the measurement gap, and a cell group that supports data reception and transmission in the measurement gap can perform signal reception and transmission.

The information about the measurement object may include information such as a standard and a frequency of the to-be-measured frequency and a list of cells on the frequency. The standard and the frequency of the to-be-measured frequency may be the same as or different from the standard and the frequency of the current serving cell. There can be a plurality of measurement objects. Each measurement object has an identifier ID.

The report configuration information may include a report criterion. The report criterion is used to describe a manner of reporting a measurement result, to be specific, periodic reporting or event-triggered reporting. For event-triggered reporting, a trigger condition may be that a reported measurement quantity is less than or greater than a preset threshold. The measurement quantity includes but is not limited to one of the following or any combination of at least two of RSRP, RSRQ, an SINR, and the like. The measurement configuration information may include a plurality of pieces of report configuration information, and each piece of report configuration information has an identifier ID.

The measurement identifier: A measurement object and a piece of report configuration information are associated by using respective identifiers IDs, that is, report configuration information of each measurement object is determined.

The measurement quantity configuration information describes a filtering parameter of a measurement quantity.

The measurement gap configuration information mainly includes three parameters: a measurement gap repetition period (Measurement Gap Repetition Period, MGRP), a measurement gap length (Measurement Gap Length, MGL), and a gap offset (gap Offset). The MGRP may be 40 ms (ms), and the maximum MGL is 6 ms. For a relationship between the measurement gap repetition period, the measurement gap length, and the gap offset, refer to FIG. 6. FIG. 6 is a schematic diagram of a measurement gap according to an embodiment of this application. As shown in FIG. 6, the gap offset is used to indicate an offset of a start subframe of a measurement gap in a measurement gap period.

S103: The UE obtains, in dual connectivity, the measurement configuration information delivered by the base station.

In dual connectivity, the UE is in an RRC connected mode, and the UE obtains the measurement configuration information delivered by the base station.

When the base station delivers the measurement configuration information by using the RRC signaling RRCConnectionReconfiguration, the UE parses the RRC signaling after receiving the RRC signaling, to obtain the measurement configuration information in the RRC signaling.

The UE may configure a measurement gap period based on the MGRP, configure a measurement gap length based on the MGL, and determine, based on the MGRP, the MGL, and the gap offset, that the start location of the measurement gap is on a system frame number (System Frame Number, SFN) and a subframe (subframe) that meet the following conditions:
SFN mod T = FLOOR (gapOffset/10);
subframe = gapOffset mod 10;
T = MGRP/10.

FLOOR (gapOffset/10) indicates that the value of gapOffset/10 is rounded down to the largest integer that is not greater than the value of gapOffset/10. gapOffset mod 10 indicates that a modulo operation is performed on gapOffset and 10.

S104: The UE determines processing capability information of the UE based on the to-be-measured frequency and the UE capability. The UE capability is used to identify a band combination supported by the UE, and the processing capability information is used to identify a first cell group in which the UE can receive and transmit a signal in the measurement gap.

A method for determining the processing capability information of the UE by the UE is the same as the method for determining the processing capability information of the UE by the base station based on the to-be-measured frequency and the UE capability in S101. For details, refer to related descriptions in S101, and details are not described herein again.

The first cell group includes an MCG and/or an SCG. When the first cell group includes the MCG and the SCG, the UE does not need the measurement gap when measuring the to-be-measured frequency; and when the first cell group includes the MCG or the SCG, the UE needs a measurement gap when measuring the to-be-measured frequency. Radio frequency channels corresponding to some component carriers CC in the second cell group are used to measure the to-be-measured frequency in the measurement gap. When the first cell group is the MCG, the second cell group is the SCG; or when the first cell group is the SCG, the second cell group is the MCG.

Further, when the UE supports a band combination consisting of a master band combination, a secondary band combination, and the to-be-measured frequency, the first cell group includes the MCG and the SCG. The master band combination is a band combination on a master node, and the secondary band combination is a band combination on a secondary node.

Further, when the UE supports a band combination consisting of a master band combination and the to-be-measured frequency, the first cell group is the MCG.

Further, when the UE supports a band combination consisting of a secondary band combination and the to-be-measured frequency, the first cell group is the SCG.

S105: The UE sends, to the base station, an acknowledgment information used to identify that the measurement configuration information is received.

When the UE obtains the measurement configuration information delivered by the base station, the UE sends the acknowledgment information to the base station. The acknowledgment information is used to notify the base station that the UE has received the measurement configuration information delivered by the base station.

The UE sends the RRC signaling RRCConnectionReconfigurationComplete to the base station, to notify the base station that the measurement configuration information is received.

It can be understood that S105 may be performed after S103, or may be performed after S104. When the UE needs to send the processing capability information to the base station by using the RRC signaling RRCConnectionReconfigurationComplete, S105 is performed after S104.

S106: The UE performs signal reception and transmission with the base station based on the processing capability information of the UE in the measurement gap.

The UE performs signal reception and transmission with the base station based on the processing capability information of the UE by using the resource allocated by the base station to the UE, so that the UE and the base station do not stop signal reception and transmission in the measurement gap. In the measurement gap, the UE and the base station may perform signal reception and transmission in the first cell group. The signal includes but is not limited to signaling, information (for example, indication information and scheduling information), a reference signal, data, and the like that are involved in a communication process between the base station and the UE.

The resource allocated by the base station to the UE may be a resource configured by the base station for the UE when the UE accesses the base station, such as a time-frequency resource of a PDCCH, an SRS, or a CSI-RS; or may be a resource indicated by DCI delivered by the base station in the measurement gap. The DCI may carry scheduling information of a PDSCH and scheduling information of a PUSCH. The scheduling information of the PDSCH is used to indicate the UE to receive data on the PDSCH, and the scheduling information of the PUSCH is used to indicate the UE to transmit data on the PUSCH.

For example, the UE receives PDSCH information and sends PUSCH information over the first cell group based on the scheduling information of the PDCCH. The scheduling information of the PDCCH may be delivered by the base station in the measurement gap, or may be sent by the UE before the measurement gap starts.

In a possible implementation, to increase a transmission rate of the UE in the first cell group, S106 may be specifically: in the measurement gap, the UE transmits a first signal to the base station through a physical uplink shared channel PUSCH in the first cell group, and receives a second signal delivered by the base station through a physical downlink shared channel PDSCH.

It can be understood that the first signal and the second signal may be to-be-transmitted signaling, or may be to-be-transmitted data other than signaling. This is not limited herein.

For example, the UE receives PDCCH information delivered by the base station in the measurement gap, and obtains scheduling information of the PDSCH and scheduling information of the PUSCH from the PDSCH information. In the measurement gap, the UE receives, in the first cell group, data on the PDSCH based on the scheduling information of the PDSCH, and sends data on the PUSCH based on the scheduling information of the PUSCH.

It can be understood that, when the base station indicates, in the measurement gap by using the DCI, the resource allocated by the base station to the UE, the UE obtains the DCI delivered by the base station, and obtains the scheduling information of the PDSCH and the scheduling information of the PUSCH that are carried in the DCI.

The UE may receive, in the measurement gap, a CRS, a synchronization signal and PBCH block (Synchronization Signal and PBCH block, SSB), or a channel-state information reference signal (Channel-state information reference signal, CSI-RS) delivered by the base station, and perform downlink channel quality measurement based on the CRS, SSB or CSI-RS. In LTE, the UE receives the CRS of the base station. In NR, the UE receives the SSB or the CSI-RS. The PBCH is a physical broadcast channel (Physical Broadcast Channel).

The UE may further send, in the measurement gap, the SRS based on the SRS configuration information, so that the base station performs channel measurement and estimation when receiving the SRS.

It can be understood that when the first cell includes the MCG or the SCG, the UE needs to configure the measurement gap to measure the to-be-measured frequency. After S104 or S105, the method may further include: the UE selects radio frequency channels of some component carriers from the second cell group, and measures the to-be-measured frequency in the measurement gap based on the measurement configuration information.

After determining the first cell group, the UE selects, from the second cell group, a radio frequency channel of a component carrier (Component Carrier, CC) used to measure the to-be-measured frequency, and configures a measurement gap of the component carrier in the second cell group based on the measurement configuration information. A start position of the measurement gap is determined according to the formula in S101. In the measurement gap, the UE stops receiving and transmitting a signal with the base station in the second cell group, and switches the radio frequency channel corresponding to the component carrier to the to-be-measured frequency, to measure signal quality of the to-be-measured frequency. The signal quality may be any one or any combination of at least two of RSRP, RSRQ, and an SINR. When the report condition described in the report configuration in the measurement configuration information is met, the UE sends the measurement report including the measurement result to the base station.

S107: The base station performs uplink and downlink signal reception and transmission with the UE based on the processing capability information of the UE in the measurement gap.

The base station performs signal reception and transmission with the UE based on the processing capability information of the UE by using the resource allocated to the UE. The base station may indicate the UE to send data on the PUSCH and receive data on the PDSCH in the measurement gap over the first cell group, so that the base station and the UE do not stop signal reception and transmission in the measurement gap in the first cell group. When the first cell group includes the MCG and the SCG, the UE does not need the measurement gap when measuring the to-be-measured frequency. In the measurement gap, the UE and the base station may receive and transmit a signal in both the master cell and the secondary cell group.

It can be understood that, in the measurement gap, the base station stops signal reception and transmission with the UE in a second cell group.

The resource allocated to the UE may be a resource configured by the base station for the UE when the UE accesses the base station, or may be a resource indicated by the downlink control information (Downlink Control Information, DCI) delivered by the base station in the measurement gap.

When the UE accesses the base station, the resource configured by the base station for the UE includes but is not limited to a time-frequency resource of the physical downlink control channel (Physical Downlink Control Channel, PDCCH).

When the UE accesses the base station, the resource configured by the base station for the UE may include a reference signal, for example, the uplink sounding reference signal (Sounding Reference Signal, SRS), a demodulation reference signal (Demodulation Reference Signal, DMRS), or a cell reference signal (Cell Reference Signal, CRS).

The SRS is used for uplink channel estimation, MCS selection, and uplink frequency selective scheduling.

The DMRS is used for related demodulation of the physical uplink shared channel (Physical Uplink Shared Channel, PUSCH) and the physical uplink control channel (Physical Uplink Control Channel, PUCCH) in LTE.

The CRS is used for downlink channel quality measurement, such as RSRP, and is used for downlink channel estimation.

For example, the base station delivers PDSCH information to the UE by using scheduling information of the PDCCH allocated by the base station to the UE when the UE accesses the base station, and receives PUSCH information sent by the UE based on the scheduling information of the PDCCH.

In a possible implementation, when the measurement configuration information includes the configuration information of the measurement gap, S107 may include: in the measurement gap, the base station receives a first signal sent by the UE through the physical uplink shared channel PUSCH in the first cell group, and transmits a second signal to the UE through the physical downlink shared channel PDSCH.

For example, the base station may send PDCCH information to the UE in the measurement gap over the first cell group. The PDCCH information carries the scheduling information of the PDSCH and the scheduling information of the PUSCH. The base station stops, in the measurement gap, scheduling the UE in the second cell group, so that the UE measures the to-be-measured frequency over one radio frequency channel in the second cell group.

The base station may receive the SRS transmitted based on the SRS configuration by the UE in the measurement gap, and perform channel estimation based on the SRS.

In this embodiment of this application, both the UE and the base station may determine the first cell group that supports signal reception and transmission in the measurement gap. In this way, neither the base station nor the UE needs to notify each other of the determined first cell group. Outside the measurement gap, the UE may perform uplink and downlink signal reception and transmission with the base station in both the master cell group and the secondary cell group. In the measurement gap, the UE and the base station do not interrupt uplink and downlink signal reception and transmission in the first cell group. The UE switches one radio frequency channel in the second cell group to the to-be-measured frequency, to measure the to-be-measured frequency. In the measurement gap, signal reception and transmission are not interrupted in the first cell group. This increases a data transmission rate of single UE in the first cell group.

When the measurement gap repetition period MGRP is 40 ms, and the measurement gap length MGL is 6 ms, data cannot be received or transmitted for 6 ms in every 40 ms in the current technology. In this embodiment, in an FDD mode, data may be transmitted and received in the first cell group by using the 6 ms, and uplink and downlink rates of the UE in the first cell may be increased by 6/40=15%.

FIG. 7 is an interaction diagram of a method for signal reception and transmission in a measurement gap according to another embodiment of this application. Based on FIG. 7, after determining the processing capability information of the UE based on the to-be-measured frequency and the UE capability, the base station may indicate the processing capability of the UE in the measurement configuration information in S102. The UE may directly obtain the processing capability information of the UE from the measurement configuration information, and does not determine the processing capability information of the UE based on the to-be-measured frequency and the UE capability in the measurement configuration information. That is, in the embodiment corresponding to FIG. 7, the UE does not need to perform S104 in FIG. 6, and the UE may save some computing resources. It can be understood that, in other embodiments, the base station may indicate the processing capability of the UE by using information other than the measurement configuration information. This is not limited herein.

Optionally, when the measurement configuration information in S 102 indicates the processing capability of the UE, a first cell group indicator transmissionInGapInd is added to the measurement configuration information on the basis of an existing information element in the protocol.

An implementation of the measurement configuration information is as follows:

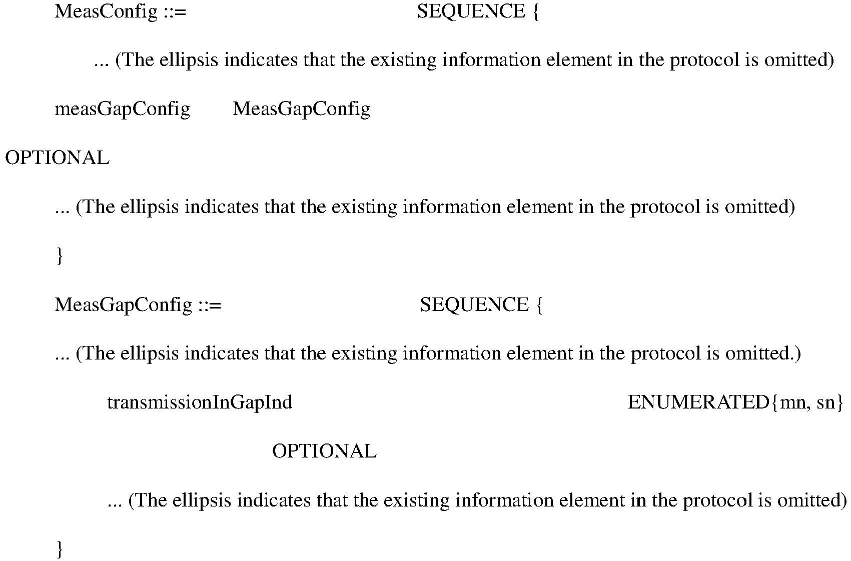

The measGapConfig information element is optional. When the first cell group determined by the base station based on the to-be-measured frequency and the UE capability includes both the MCG and the SCG, the measurement configuration does not include the information element, that is, the base station does not configure the measurement gap. Therefore, the base station and the terminal can keep uplink and downlink signal reception and transmission in the MCG and the SCG. When the base station determines that the first cell group includes the MCG or the SCG, the measurement configuration includes the information element measGapConfig, and the information element measGapConfig includes the information element transmissionInGapInd, to indicate whether the MCG or the SCG is the first cell group. For example, when transmissionInGapInd is set to mn, in the measurement gap, the master cell group can perform uplink and downlink signal reception and transmission, but the secondary cell group cannot perform uplink and downlink signal reception and transmission; when transmissionInGapInd is set to sn, in the measurement gap, the secondary cell group can perform uplink and downlink signal reception and transmission, but the master cell group cannot perform uplink and downlink signal reception and transmission. When the base station determines that the first cell group includes neither the MCG nor the SCG, the measurement configuration includes the information element measGapConfig, but the information element measGapConfig does not include the information element transmissionInGapInd.

The information element transmissionInGapInd is optional. If the information element transmissionInGapInd is not included, the first cell group includes neither the MCG nor the SCG. When the information element transmissionInGapInd is set to mn, the first cell group is the SCG. When the information element transmissionInGapInd is set to sn, the first cell group is the SCG.

FIG. 8 is an interaction diagram of a method for signal reception and transmission in a measurement gap according to still another embodiment of this application. Based on FIG. 8, before sending the measurement configuration information, the base station does not need to determine the processing capability information of the UE (that is, S101 does not need to be performed). After determining the processing capability information of the UE based on the to-be-measured frequency and the UE capability, the UE may send the processing capability information of the UE to the base station. The processing capability information of the UE is carried in radio resource control RRC signaling or a media access control control element MAC CE. The RRC signaling may be RRCConnectionReconfigurationComplete, may be UE auxiliary information signaling, or may be other RRC signaling. This is not limited herein.

In FIG. 8, when the UE performs S105 to send, to the base station, the acknowledgment information used to identify that the measurement configuration information is received, the UE may send the processing capability information of the UE together with the acknowledgment information to the base station. This can save signaling overheads. The UE may alternatively separately send a piece of information to the base station to notify the base station of the processing capability information of the UE. In this way, compared with "sending the processing capability information of the UE together with the acknowledgment information to the base station", one more piece of signaling is used to carry the processing capability information of the UE. This increases signaling overheads.

In a possible implementation, when the acknowledgment information is sent by using radio resource control RRC signaling, the processing capability information of the UE is carried in the RRC signaling.

For example, when the UE sends RRC signaling RRCConnectionReconfigurationComplete to the base station, to notify the base station that the measurement configuration information is received, the processing capability information of the UE may be carried in an information element transmissionInGapInd in the RRC signaling RRCReconfigurationComplete. Herein, transmissionInGapInd can be provided in the following format:
transmissionInGapInd ENUMERATED {all, none, mn, sn}

When transmissionInGapInd is set to all, the measurement gap is not required; when transmissionInGapInd is set to none, neither the master cell group nor the secondary cell group can perform uplink and downlink signal reception and transmission in the measurement gap; when transmissionInGapInd is set to mn, in the measurement gap, the master cell group can perform uplink and downlink signal reception and transmission, but the secondary cell group cannot perform uplink and downlink signal reception and transmission; and when transmissionInGapInd is set to sn, in the measurement gap, the secondary cell group can perform uplink and downlink signal reception and transmission, but the master cell group cannot perform uplink and downlink signal reception and transmission.

In a possible implementation, the UE separately sends, to the base station, acknowledgment information used to identify that the measurement configuration information is received and the processing capability information of the UE. In this case, after S103 and before S104, the method may further include: the UE sends the processing capability information of the UE to the base station, where the processing capability information of the UE is used to indicate the base station to keep performing signal reception and transmission with the UE in the measurement gap. The base station receives the processing capability information of the UE.

Optionally, the processing capability information of the UE is carried in the UE auxiliary information signaling.

For example, the UE sends the RRC signaling RRCConnectionReconfigurationComplete to the base station, to notify the base station that the measurement configuration information is received. The UE may send the UE auxiliary information signaling carrying the processing capability information of the UE to the base station. For example, the transmissionInGapInd information element may be carried by UE auxiliary information UEAssistanceInformation signaling.

Optionally, the processing capability information of the UE is carried in the media access control control element MAC CE.

The UE may use the media access control control element (Medium Access Control Control Element, MAC CE), for example, Transmission In Gap Indication MAC CE. The Transmission In Gap Indication MAC CE occupies 8 bits (bit). When Transmission In Gap Indication MAC CE is set to 0, the measurement gap is not required; when Transmission In Gap Indication MAC CE is set to 1, neither the master cell group nor the secondary cell group can perform uplink and downlink signal reception and transmission in the measurement gap; when Transmission In Gap Indication MAC CE is set to 2, in the measurement gap, the master cell group can perform uplink and downlink signal reception and transmission, but the secondary cell group cannot perform uplink and downlink signal reception and transmission; and when Transmission In Gap Indication MAC CE is set to 3, in the measurement gap, the secondary cell group can perform uplink and downlink signal reception and transmission, but the master cell group cannot perform uplink and downlink signal reception and transmission.

Specifically, when the UE notifies, by using the RRC signaling, the base station that the measurement configuration information is received, and when the RRC signaling reaches the MAC, the UE adds a packet header and the MAC CE signaling to the RRC signaling, transmits the processed signaling to the physical layer, and sends the processed signaling to the base station over the physical layer.

In this embodiment of this application, the UE may determine the processing capability information of the UE based on a radio frequency capability supported by the UE and the to-be-measured frequency, and report the processing capability information to the base station, and the base station and the UE may perform signal reception and transmission in the measurement gap based on the processing capability information determined by the UE. The band combination supported in the UE capability reported by the UE is affected by a market demand, and cannot fully reflect the radio frequency capability of the UE. That is, the supported band combination reported by the UE may be only a part of the band combination actually supported by the UE. Therefore, the processing capability information determined and reported by the UE based on the actual UE capability is more accurate than the processing capability information of the UE determined by the base station based on the UE capability reported by the UE. To be specific, the first cell group can be determined more accurately and comprehensively. This increases possible scenarios in which uplink and downlink signal reception and transmission are supported in the measurement gap, further improves the uplink rate and the downlink rate of the UE.

It should be understood that sequence numbers of the steps do not mean an execution sequence in the foregoing embodiments. The execution sequence of the processes should be determined based on functions and internal logic of the processes, and should not constitute any limitation on the implementation processes of the embodiments of this application.

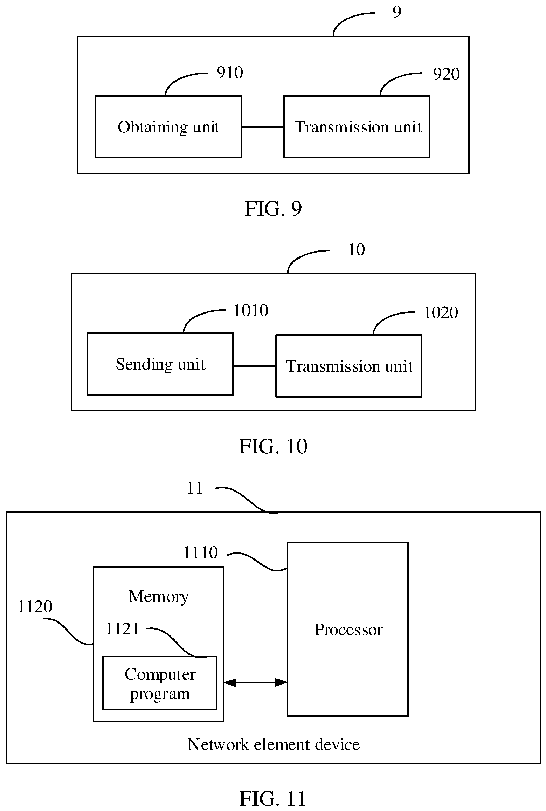

Corresponding to the steps performed by the UE in the method for signal reception and transmission in a measurement gap described in the foregoing embodiment, FIG. 9 is a block diagram of a structure of a signal reception and transmission apparatus according to an embodiment of this application. For ease of description, only a part related to this embodiment of this application is shown. In this embodiment, units included in the signal reception and transmission apparatus are configured to perform the steps performed by the UE in the embodiments corresponding to FIG. 5, FIG. 7, and FIG. 8. For details, refer to related descriptions in FIG. 5, FIG. 7, and FIG. 8. Details are not described herein again. The signal reception and transmission apparatus 9 may include:
an obtaining unit 910, configured to obtain, in dual connectivity, measurement configuration information delivered by a base station, where the measurement configuration information includes a to-be-measured frequency and measurement gap configuration information; and
a transmitting unit 920, configured to perform, in the measurement gap, signal reception and transmission with the base station based on processing capability information of the UE, where the processing capability information is used to identify a first cell group in which the UE can receive and transmit a signal in the measurement gap, the processing capability information is determined based on the to-be-measured frequency and a UE capability, and the UE capability is used to identify a band combination supported by the UE.

It should be understood that the UE capability may be a radio frequency capability of the UE, and the UE capability is a band combination supported by the UE.

Optionally, the processing capability information of the UE is determined by the UE based on the to-be-measured frequency and the UE capability.

Optionally, the processing capability information is determined by the base station based on the to-be-measured frequency and the UE capability reported by the UE, and is then sent to the UE.

Optionally, the transmitting unit 920 is specifically configured to: in the measurement gap, transmit a first signal to the base station in the first cell group through a physical uplink shared channel PUSCH, and receive a second signal delivered by the base station through a physical downlink shared channel PDSCH.

Optionally, the first cell group includes a master cell group (Master Cell Group, MCG) and/or a secondary cell group (Secondary Cell Group, SCG). It should be understood that the MCG is a cell group corresponding to a master node (a master base station), and the SCG is a cell group corresponding to a secondary node (a secondary base station).

Optionally, when the UE supports a band combination consisting of a master band combination, a secondary band combination, and the to-be-measured frequency, the first cell group includes the MCG and the SCG.

Optionally, when the UE supports a band combination consisting of a master band combination and the to-be-measured frequency, the first cell group is the MCG.

Optionally, when the UE supports a band combination consisting of a secondary band combination and the to-be-measured frequency, the first cell group is the SCG.

Optionally, when the first cell includes the MCG or the SCG, the signal reception and transmission apparatus further includes:
a measurement unit, configured to: after the obtaining unit obtains the measurement configuration information delivered by the base station, select at least one component carrier from a second cell group, and measure the to-be-measured frequency in the measurement gap based on the measurement configuration information.

Optionally, the measurement configuration information is delivered by the base station after the base station determines the processing capability information of the UE based on the to-be-measured frequency and the UE capability reported by the UE.

Optionally, the signal reception and transmission apparatus further includes:
a sending unit, configured to: before the transmitting unit performs signal reception and transmission with the base station based on the processing capability information, send acknowledgment information, used to identify that the measurement configuration information is received, to the base station.

Optionally, the signal reception and transmission apparatus further includes:
a determining unit, configured to determine the processing capability information based on the to-be-measured frequency and a UE capability; and
the sending unit is further configured to: after the determining unit determines the processing capability information, and before the transmitting unit performs signal reception and transmission with the base station based on the processing capability information, send processing capability information of the UE to the base station, where the processing capability information of the UE is used to indicate that the base station can perform signal reception and transmission with the UE in the measurement gap.

The processing capability information of the UE is carried in radio resource control RRC signaling or a media access control control element MAC CE.

Optionally, to reduce signaling overheads, when the acknowledgment information is sent by using radio resource control RRC signaling, the processing capability information of the UE is carried in the RRC signaling.

Optionally, the processing capability information of the UE is carried in the UE auxiliary information signaling.

Optionally, the processing capability information of the UE is carried in the media access control control element MAC CE.

In this embodiment, the UE may report the processing capability information of the UE in a plurality of forms.

In this embodiment, the signal reception and transmission apparatus 9 may be UE, a chip in UE, or a functional module integrated in UE. The chip or the functional module may be located in a control center (for example, a console) of the UE, and controls the UE to implement the method for signal reception and transmission in a measurement gap provided in this application.

It should be noted that content such as information exchange between the foregoing apparatuses/units and the execution processes thereof is based on a same concept as the embodiments of the method for signal reception and transmission in a measurement gap in this application. For specific functions and technical effects of the content, refer to the embodiments of the method for signal reception and transmission in a measurement gap. Details are not described herein again.

Corresponding to the steps performed by the base station in the method for signal reception and transmission in a measurement gap described in the foregoing embodiment, FIG. 10 is a structural block diagram of another signal reception and transmission apparatus according to an embodiment of this application. For ease of description, only a part related to this embodiment of this application is shown. In this embodiment, units included in the signal reception and transmission apparatus are configured to perform the steps performed by the base station in the embodiments corresponding to FIG. 5, FIG. 7, and FIG. 8. For details, refer to related descriptions in FIG. 5, FIG. 7, and FIG. 8. Details are not described herein again. The signal reception and transmission apparatus 10 may include:
a sending unit 1010, configured to send, in dual connectivity, measurement configuration information to UE, where the measurement configuration information includes a to-be-measured frequency and measurement gap gap configuration information; and
a transmitting unit 1020, configured to perform, in the measurement gap, signal reception and transmission with the UE based on processing capability information of the UE, where the processing capability information of the UE is used to identify a first cell group in which the UE can receive and transmit data in the measurement gap, the processing capability information of the UE is determined based on the to-be-measured frequency and a UE capability, and the UE capability is used to identify a band combination supported by the UE.

Optionally, the transmitting unit is specifically configured to: in the measurement gap, receive the first signal sent by the UE in the first cell group through a physical uplink shared channel PUSCH, and transmit the second signal to the UE through a physical downlink shared channel PDSCH.

Optionally, the first cell group includes a master cell group MCG and/or a secondary cell group SCG.

Optionally, when the first cell includes the MCG or the SCG, the signal reception and transmission apparatus further includes:
a control unit, configured to: after the sending unit sends the measurement configuration information to the UE, stop signal reception and transmission with the UE in the second cell group.

Optionally, the signal reception and transmission apparatus further includes:
a receiving unit, configured to: before the transmitting unit performs signal reception and transmission with the UE based on processing capability information of the UE, receive acknowledgment information that is sent by the UE and used to identify that the measurement configuration information is received.

Optionally, the signal reception and transmission apparatus further includes:
a determining unit, configured to: before the transmitting unit performs signal reception and transmission with the UE based on the processing capability information of the UE, determine processing capability information of the UE based on the to-be-measured frequency and a UE capability reported by the UE. It can be understood that the UE capability is a band combination supported by the UE, and is reported by the UE.

The measurement configuration information further includes UE processing capability indication information, where the UE processing capability indication information is used by the UE to determine processing capability information of the UE.

Optionally, the receiving unit is further configured to: before the transmitting unit performs signal reception and transmission with the UE based on processing capability information of the UE, receive the processing capability information of the UE sent by the UE.

Optionally, when the UE supports a band combination consisting of a master band combination, a secondary band combination, and the to-be-measured frequency, the first cell group includes the MCG and the SCG.

Optionally, when the UE supports a band combination consisting of a master band combination and the to-be-measured frequency, the first cell group includes the MCG.

Optionally, when the UE supports a band combination consisting of a secondary band combination and the to-be-measured frequency, the first cell group is the SCG.

Optionally, when the acknowledgment information is sent by using radio resource control RRC signaling, the processing capability information is carried in the RRC signaling.

Optionally, the processing capability information of the UE is carried in the UE auxiliary information signaling.

Optionally, the processing capability information of the UE is carried in the media access control control element MAC CE.

In this embodiment, the signal reception and transmission apparatus 10 may be the base station, a chip in the base station, or a functional module integrated in the base station. The chip or the functional module may be located in a control center (for example, a console) of the base station, and controls the base station to implement the method for signal reception and transmission in a measurement gap provided in this application.

It should be noted that content such as information exchange between the foregoing apparatuses/units and the execution processes thereof is based on a same concept as the embodiments of the method for signal reception and transmission in a measurement gap this application. For specific functions and technical effects of the content, refer to the embodiments of the method for signal reception and transmission in a measurement gap. Details are not described herein again.

FIG. 11 is a schematic diagram of a structure of a network element device according to an embodiment of this application. As shown in FIG. 11, a network element device 11 in this embodiment includes: at least one processor 1110 (only one processor is shown in FIG. 11), a memory 1120, and a computer program 1121 that is stored in the memory 1120 and that can be run on the at least one processor 1110. When executing the computer program 1121, the processor 1110 implements steps in any one of the foregoing embodiments of the method for signal reception and transmission in a measurement gap.

When the network element device is UE, when the processor 1110 invokes the computer program 1121 stored in the memory 1120, to enable the UE to perform the steps performed by the UE in the embodiments corresponding to FIG. 5, FIG. 7, and FIG. 8.

When the network element device is a base station, when the processor 1110 invokes the computer program 1121 stored in the memory 1120, to enable the base station to perform the steps performed by the base station in the embodiments corresponding to FIG. 5, FIG. 7, and FIG. 8.

Persons skilled in the art may understand that FIG. 11 is merely an example of the network element device 11, and does not constitute a limitation on the network element device 11. The electronic device may include more or fewer components than those shown in the figure, or may combine some components, or may have different components. For example, the electronic device may further include an input/output device, a network access device, or the like.

The processor 1110 may be a central processing unit (Central Processing Unit, CPU). The processor 1110 may alternatively be another general-purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 1120 may be an internal storage unit of the network element device 11, for example, a hard disk or memory of the network element device 11. In some other embodiments, the memory 1120 may alternatively be an external storage device of the network element device 11, for example, a plug -connected hard disk, a smart media card (Smart Media Card, SMC), a secure digital (Secure Digital, SD) card, or a flash card (Flash Card) that is disposed on the network element device 11. Further, the memory 1120 may alternatively include both an internal storage unit and an external storage device of the network element device 11. The memory 1120 is configured to store an operating system, an application program, a boot loader (Boot Loader), data, other programs, and the like, for example, program code of the computer program. The memory 1120 may further be configured to temporarily store output data or to-be-output data.

It should be noted that content such as information exchange between the foregoing apparatuses/units and the execution processes thereof is based on a same concept as the method embodiments of this application. For specific functions and technical effects of the content, refer to the method embodiments. Details are not described herein again.

A person skilled in the art may clearly understand that, for the purpose of convenient and brief description, division into the foregoing function units or modules is merely used as an example for description. In an actual application, the foregoing functions may be allocated to different function units or modules for implementation according to a requirement. That is, an inner structure of the apparatus is divided into different function units or modules to implement all or some of the functions described above. Functional units and modules in the embodiments may be integrated into one processing unit, or each of the units may exist alone physically, or two or more units may be integrated into one unit. The integrated unit may be implemented in a form of hardware, or may be implemented in a form of a software functional unit. In addition, specific names of the function units or modules are merely provided for distinguishing the units from one another, but are not intended to limit the protection scope of this application. For a specific working process of the units or modules in the foregoing system, refer to a corresponding process in the foregoing method embodiments. Details are not described herein again.

An embodiment of this application further provides a network device. The network device includes at least one processor, a memory, and a computer program that is stored in the memory and that can run on the at least one processor. When executing the computer program, the processor implements steps in any one of the foregoing method embodiments.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product is run on a mobile terminal, the mobile terminal is enabled to implement steps in the foregoing method embodiments when executing the computer program product.

When the integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code, and the computer program code may be in a source code form, an object code form, an executable file form, some intermediate forms, or the like. The computer-readable medium may include at least any entity or apparatus that can include the computer program code in a photographing device/terminal device, a recording medium, a computer memory, a read-only memory (Read-Only Memory, ROM), a random access memory (Random Access Memory, RAM), an electrical carrier signal, a telecommunication signal, and a software distribution medium, for example, a USB flash drive, a removable hard disk, a magnetic disk, or an optical disk. In some jurisdictions, according to legislation and patent practice, a computer-readable medium cannot be an electrical carrier signal or a telecommunications signal.

In the foregoing embodiments, the descriptions of all embodiments have respective focuses. For a part that is not described or recorded in detail in an embodiment, refer to related descriptions in other embodiments.

A person of ordinary skill in the art may be aware that, units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the embodiments provided in this application, it should be understood that the disclosed apparatus/network device and method may be implemented in other manners. For example, the described apparatus/network device embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objective of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A method for signal reception and transmission in a measurement gap, applied to user equipment UE, wherein the method comprises:
obtaining, in dual connectivity, measurement configuration information delivered by a base station, wherein the measurement configuration information comprises a to-be-measured frequency and measurement gap configuration information; and
performing, in the measurement gap, signal reception and transmission with the base station based on processing capability information of the UE, wherein the processing capability information is used to identify a first cell group in which the UE can receive and transmit a signal in the measurement gap, the processing capability information is determined based on the to-be-measured frequency and a UE capability, and the UE capability is used to identify a band combination supported by the UE.

2. The method according to claim 1, wherein the process capability information is determined by the UE.

3. The method according to claim 1, wherein the processing capability information is determined by the base station and then sent to the UE.

4. The method according to claim 3, wherein the measurement configuration information further comprises the processing capability information.

5. The method according to any one of claims 1 to 4, wherein the performing signal reception and transmission with the base station based on processing capability information of the UE comprises:
in the measurement gap, transmitting a first signal to the base station through a physical uplink shared channel PUSCH in the first cell group, and receiving a second signal delivered by the base station through a physical downlink shared channel PDSCH in the first cell group.

6. The method according to any one of claims 1 to 5, wherein when the UE supports a band combination consisting of a master band combination, a secondary band combination, and the to-be-measured frequency, the first cell group comprises an MCG and an SCG.

7. The method according to any one of claims 1 to 5, wherein when the UE supports a band combination consisting of the master band combination and the to-be-measured frequency, the first cell group is the MCG.

8. The method according to any one of claims 1 to 5, wherein when the UE supports a band combination consisting of the secondary band combination and the to-be-measured frequency, the first cell group is the SCG.

9. The method according to any one of claims 1 to 5 and claims 7 and 8, wherein when the first cell group comprises the MCG or the SCG, after the obtaining measurement configuration information delivered by a base station, the method further comprises:
selecting at least one component carrier from a second cell group, and measuring the to-be-measured frequency in the measurement gap based on the measurement configuration information.

10. The method according to claim 2, wherein before the performing signal reception and transmission with the base station based on processing capability information of the UE, the method further comprises:
sending the processing capability information to the base station.

11. The method according to claim 10, wherein the processing capability information of the UE is carried in radio resource control RRC signaling or a media access control control element MAC CE.

12. A method for signal reception and transmission in a measurement gap, applied to a base station, wherein the method comprises:
delivering, in dual connectivity, measurement configuration information to UE, wherein the measurement configuration information comprises a to-be-measured frequency and measurement gap configuration information; and
performing, in the measurement gap, signal reception and transmission with the UE based on processing capability information of the UE, wherein the processing capability information is used to identify a first cell group in which the UE can receive and transmit a signal in the measurement gap, the processing capability information is determined based on the to-be-measured frequency and a UE capability, and the UE capability is used to identify a band combination supported by the UE.

13. The method according to claim 12, wherein the performing signal reception and transmission with the UE based on processing capability information of the UE comprises:
in the first cell group, receiving, through a physical uplink shared channel PUSCH, a first signal sent by the UE, and sending a second signal to the UE through a physical downlink shared channel PDSCH.

14. The method according to claim 13, wherein when the first cell group comprises an MCG or an SCG, after the sending measurement configuration information to UE, the method further comprises:
stopping, in the measurement gap, signal reception and transmission with the UE in a second cell group.

15. The method according to any one of claims 12 to 14, wherein before the performing signal reception and transmission with the UE based on processing capability information of the UE, the method further comprises:
determining the processing capability information of the UE based on the to-be-measured frequency and a UE capability reported by the UE.

16. The method according to claim 15, wherein the measurement configuration information further comprises the processing capability information of the UE.

17. The method according to claim 12 or 15, wherein before the performing signal reception and transmission with the UE based on processing capability information of the UE, the method further comprises:
receiving the processing capability information of the UE sent by the UE.

18. The method according to claim 15, wherein when the UE supports a band combination consisting of a master band combination, a secondary band combination, and the to-be-measured frequency, the first cell group comprises the MCG and the SCG.

19. The method according to claim 15, wherein when the UE supports a band combination consisting of the master band combination and the to-be-measured frequency, the first cell group is the MCG.

20. The method according to claim 15, wherein when the UE supports a band combination consisting of the secondary band combination and the to-be-measured frequency, the first cell group is the SCG.

21. A network element device, comprising a memory, a processor, and a computer program that is stored in the memory and that can run on the processor, wherein when the processor executes the computer program, the network element device performs the method for signal reception and transmission in a measurement gap according to any one of claims 1 to 11 or the method for signal reception and transmission in a measurement gap according to any one of claims 12 to 20.

22. A computer-readable storage medium, wherein the computer-readable storage medium stores a computer program, and when the computer program is executed by a processor, a network element device is enabled to perform the method for signal reception and transmission in a measurement gap according to any one of claims 1 to 11, or the method for signal reception and transmission in a measurement gap according to any one of claims 12 to 20.

23. A computer program product, wherein when the computer program product runs on a network element device, the network element device performs the method for signal reception and transmission in a measurement gap according to any one of claims 1 to 11, or the method for signal reception and transmission in a measurement gap according to any one of claims 12 to 20.
